(19) Europäisches Patentamt
European Patent Office
Office européen des brevets

(11) EP 0 985 689 A1

(12) **EUROPEAN PATENT APPLICATION**

(43) Date of publication:
**15.03.2000 Bulletin 2000/11**

(51) Int. Cl.[7]: **C08F 212/08**, C08F 210/02
// (C08F210/02, 212:08)

(21) Application number: **99117558.9**

(22) Date of filing: **06.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.09.1998 JP 25222298**
**09.09.1998 JP 25490798**

(71) Applicant:
**DENKI KAGAKU KOGYO KABUSHIKI KAISHA**
**Chiyoda-ku Tokyo (JP)**

(72) Inventors:
- **Arai, Toru**
**Denki Kagaku Kogyo Kabushiki Kaisha**
**Machida-shi, Tokyo (JP)**
- **Otsu, Toshiaki**
**Denki Kagaku Kogyo K. K.**
**Machida-shi, Tokyo (JP)**
- **Nakajima, Masataka**
**Denki Kagaku Kogyo K. K.**
**Machida-shi, Tokyo (JP)**

(74) Representative:
**Hartz, Nikolai F., Dr. et al**
**Wächtershäuser & Hartz,**
**Patentanwälte,**
**Tal 29**
**80331 München (DE)**

# (54) Aromatic vinyl compound-ethylene copolymer and method for producing the same

(57) An aromatic vinyl compound-ethylene copolymer having the following features:

(1) an aromatic vinyl compound content is from 1 mol% to 99 mol%.
(2) an aromatic vinyl compound unit-ethylene unit alternating structure has a stereoregularity having an isotactic diad index of at least 0.75; and
(3) even after sufficiently subjecting to crystallization, a crystallinity derived from an aromatic vinyl compound-ethylene alternating structure is not observed.



Printed by Xerox (UK) Business Services
2.16.7/3.6

## Description

The present invention relates to an aromatic vinyl compound-ethylene copolymer and a method for producing the same.

Some styrene-ethylene copolymers obtainable by using so-called single-site catalyst systems comprising a transition metal compound and an organoaluminum compound, and methods for their production, have been known.

JP-A-3-163088 and JP-A-7-53618 disclose styrene-ethylene copolymers where no normal styrene chain (head-to-tail chain of styrene unit) is present, i.e. so-called pseudo random copolymers, obtained by using a complex having a so-called constrained geometrical structure (CGCT catalyst). Further, hereinafter styrene may sometimes be represented by St.

A polymerization catalyst such as a CGCT catalyst can not form a styrene chain structure of head-to-tail, and this means to constrain a polymer chain-growing reaction. For example, when a polymer terminal is a styrene unit, styrene can not be coordinated and the polymer terminal must wait for ethylene. Such a constraint on a monomer sort in the process of polymer growth greatly reduces a catalyst activity as compared with a catalyst having no constraint. Further, since no normal styrene chain is present, the content of styrene can not exceed 50 mol%.

Further, phenyl groups in the alternating structure of styrene-ethylene present in such pseudo random copolymers, have no stereoregularity.

JP-A-6-49132 and Polymer Preprints, Japan, 42, 2292 (1993) disclose methods for producing similar styrene-ethylene copolymers wherein no normal St chain is present, i.e. so-called pseudo random copolymers, by using a catalyst comprising a bridged metallocene type Zr complex and a cocatalyst.

However, according to Polymer Preprints, Japan, 42, 2292 (1993), phenyl groups in the alternating structure of styrene-ethylene present in such pseudo random copolymers, have no substantial stereoregularity. Further, like in the case of a complex having a constrained geometrical structure, no normal styrene chain is present, and the styrene content can not exceed 50 mol%. The catalytic activities are also practically inadequate.

Further, it has recently been reported to produce a styrene-ethylene copolymer close to an alternating copolymer having a stereoregularity under a condition of an extremely low temperature (-25°C) by using a specific bridged bisindenyl type Zr complex, i.e. rac[ethylenebis(indenyl)zirconium dichloride] (Macromol. Chem., Rapid Commun., 17, 745 (1996)).

However, from the 13C-NMR spectrum disclosed and the description of the literature, it is evident that this copolymer has no head-to-tail styrene chain. Further, if copolymerization is carried out at a polymerization temperature of at least room temperature by using this complex, only a copolymer having a low styrene content and a low molecular weight is obtainable.

On the other hand, a styrene-ethylene alternating copolymer obtainable by using a Ti complex having a substituted phenol type ligand, is known (JP-A-3-250007 and Stud. Surf. Sci. Catal., 517 (1990)). This copolymer has a feature that it consists essentially of an alternating structure of ethylene and styrene and contains substantially no other structure such as an ethylene chain, a structure comprising an ethylene chain and styrene or a structure of e.g. a head-to-head or tail-to-tail bond (hereinafter referred to as an inversion bond) of styrene. The alternating index (value $\lambda$ in the present specification) of the copolymer is at least 70, substantially at least 90.

Namely, the resulting copolymer is a copolymer having a very high degree of alteration and consisting substantially solely of the alternating structure, whereby it is substantially difficult to change the compositional ratio of the copolymer consisting of 50 mol% of ethylene and 50 mol% of styrene.

JP-A-9-309925 discloses a novel ethylene-styrene copolymer having a styrene content of from 1 to 55 mol%, an isotactic stereoregularity in the styrene-ethylene alternating structure and an alternating index of copolymer ($\lambda$ value in the present specification) of at most 70. This copolymer can have various characteristics of a relatively high alternating index and a crystallinity based on alternating structure, and also can have a melting point, a crystal melting heat of at least about 10 J/g and X-ray diffraction peak.

However, there are uses which do not require crystallinity as in the case of a use requiring a size stability at the time of molding or the like, and there are sometimes caused problems when an unpreferable change as a lapse of time due to slow crystallization is caused in physical properties of a resin or a resin composition. Thus, a copolymer of low alternating property (low $\lambda$ value), i.e. a styrene-ethylene random copolymer having less crystallinity or no crystallinity, is demanded. Further, it is demanded to provide a method for producing such a desirable copolymer with a practically high activity.

In order to solve the above problems, the present invention provides an aromatic vinyl compound-ethylene random copolymer having a high random property (low alternating property) and having substantially no crystallinity derived from alternating structure, and also provides a method for producing such a polymer with a practically high activity.

Thus, the present invention provides an aromatic vinyl compound-ethylene copolymer having the following features:

(1) an aromatic vinyl compound content is from 1 mol% to 99 mol%.

(2) an aromatic vinyl compound unit-ethylene unit alternating structure has a stereoregularity having an isotactic diad index of at least 0.75; and

(3) even after sufficiently subjecting to crystallization, a crystallinity derived from an aromatic vinyl compound-ethylene alternating structure is not observed.

The present invention further provides an aromatic vinyl compound-ethylene copolymer, characterized by having a head-to-tail chain structure of 2 or more aromatic vinyl compound units.

The present invention still further provides an aromatic vinyl compound-ethylene copolymer, wherein the aromatic vinyl compound content is from 15 mol% to 85 mol%, more preferably from 40 mol% to 85 mol%, most preferably from 50 mol% to 85 mol%, and a melting point is not observed between 70°C to 200°C by DSC measurement.

The present invention still further provides an aromatic vinyl compound-ethylene copolymer having an aromatic vinyl compound content of from 15 mol% to 85 mol%, preferably from 40 mol% to 85 mol%, wherein an alternating structure index λ calculated by the following formula (i) satisfies the following formula (ii);

$$\lambda = A3/A2 \times 100 \qquad \text{Formula (i)}$$

$$\text{in case of } 15 \leqq x < 50 \qquad 1 \leqq \lambda < x-10 \qquad \text{Formula (ii)}$$

$$\text{in case of } 50 \leqq x \leqq 85 \qquad 1 \leqq \lambda < 90-x$$

wherein x is an aromatic vinyl compound content (mol%), and in the formula (i), an A3 value is a total value of areas of three kinds of peaks a, b and c derived from an aromatic vinyl compound-ethylene alternating structure of the following formula (1) in accordance with 13C-NMR measurement, and an A2 value is a total value of peak areas derived from main chain methylene and main chain methine carbons observed in the range of from 0 to 50 ppm in accordance with 13C-NMR measurement based on TMS;

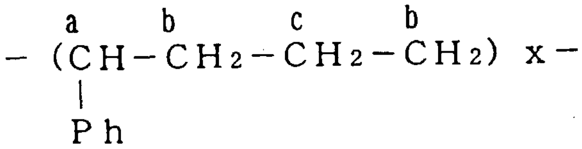

(1)

wherein Ph is an aromatic group, and x represents a number of repeating units and is an integer of at least 2.

The present invention still further provides an aromatic vinyl compound-ethylene copolymer, characterized by having peaks at 40-45 ppm, preferably at 40.4-41.0 ppm, 42.3-43.6 ppm, 43.0-43.6 ppm and 43.7-44.5 ppm, more preferably at 42.3-43.6 ppm and 43.7-44.5 ppm, observed by 13C-NMR measurement based on TMS.

The present invention still further provides an aromatic vinyl compound-ethylene copolymer, wherein the aromatic vinyl compound unit having a head-to-tail chain structure is at least 0.1%, preferably at least 1.0% of the total amount of aromatic vinyl compound units contained in the copolymer and the aromatic vinyl compound content is at least 1 mol% and less than 30 mol%.

The present invention still further provides an aromatic vinyl compound-ethylene copolymer, characterized by having a weight average molecular weight of at least 10,000 in terms of molecular weight of standard polystyrene calculation and a molecular weight distribution (Mw/Mn) of at most 6.

The random copolymer of the present invention is a copolymer containing an aromatic vinyl compound unit chain structure having head-to-tail bonded, a chain structure having ethylene units bonded and a structure having an aromatic vinyl compound unit and an ethylene unit bonded. Depending on the styrene content or polymerization conditions such as polymerization temperature, the ratio of these structures contained in the copolymer varies. The ratio of these structures contained and the structure distribution are not restricted by structure distribution according to specific statistical calculation.

Figure 1 is a GPC chart of the copolymer obtained in Example 1.
Figure 2 is a DSC chart of the copolymer obtained in Example 1.
Figure 3 is an X-ray diffraction pattern of the copolymer obtained in Example 1.
Figure 4 is an X-ray diffraction pattern of a copolymer having a crystal structure derived from ethylene-styrene alternating structure.
Figure 5 is 13C-NMR spectrum (methine-methylene zone) of the copolymer obtained in Example 2.

Figure 6 is 13C-NMR spectrum (methine-methylene zone) of the copolymer obtained in Example 5.

Hereinafter, the aromatic vinyl compound-ethylene copolymer of the present invention is explained by taking a styrene-ethylene copolymer as an example for instance, but the present invention is not limited thereto.
Its structure is determined in accordance with nuclear magnetic resonance method (NMR method).
The copolymer of the present invention has main peaks at the following positions determined in accordance with 13C-NMR measurement based on TMS.
Peaks derived from main chain methylene and main chain methine carbons are present in the vicinity of 24-25 ppm, in the vicinity of 27 ppm, in the vicinity of 30 ppm, in the vicinity of 34-37 ppm, in the vicinity of 40-41 ppm and in the vicinity of 42-46 ppm, and peaks derived from 5 carbons not bonded to the polymer main chain among phenyl groups are present in the vicinity of 126 ppm and 128 ppm, and a peak derived from one carbon bonded to the polymer main chain among phenyl groups is present in the vicinity of 146 ppm.
The styrene-ethylene copolymer of the present invention is a copolymer satisfying the following conditions:

(1) an aromatic vinyl compound content is from 1 mol% to 99 mol%;
(2) an aromatic vinyl compound unit-ethylene unit alternating structure has a stereoregularity having an isotactic diad index of at least 0.75; and
(3) even after sufficiently subjecting to crystallization, a crystallinity derived from an aromatic vinyl compound-ethylene alternating structure is not observed.

Further, the styrene-ethylene copolymer of the present invention is an aromatic vinyl compound-ethylene copolymer having a head-to-tail chain structure of 2 or more aromatic vinyl compound units.
The aromatic vinyl compound content is determined in accordance with 1H-NMR.
A head-to-tail bonded chain structure of styrene units contained in the styrene-ethylene copolymer of the present invention is a chain structure of two or more styrenes expressed by the following structure.

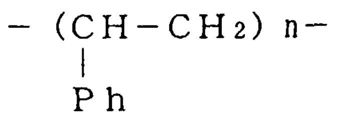

(2)

wherein n is an integer of at least 2, and Ph is a phenyl group.
A chain structure having two styrene units bonded by head-to-tail, has peaks in the vicinity of 42-43 ppm and 43-45 ppm, and preferably 42.3-43.6 ppm and 43.7-44.5 ppm, in accordance with 13C-NMR measurement based on TMS using tetrachloroethane-d as a solvent.
A chain structure having at least 3 styrene units bonded by head-to-tail has peaks in the vicinity of 40-41 ppm and 43-44 ppm, and preferably 40.4-41.0 ppm and 43.0-43.6 ppm, in accordance with the same measurement method.
Accordingly, a chain structure having at least 2 styrene units bonded by head-to-tail, has peaks in the vicinity of 40-45 ppm, preferably 40.4-41.0 ppm, 42.3-43.6 ppm, 43.0-43.6 ppm and 43.7-44.5 ppm.
On the other hand, a conventionally known pseudo random copolymer does not have a head-to-tail chain structure of styrene even when a styrene content reaches maximum and is in the vicinity of 50 mol%. Further, even when trying to homopolymerize styrene by using a catalyst for producing a pseudo random copolymer, a polymer can not be obtained. There is a case wherein quite a small amount of atactic styrene homopolymer can be obtained depending on polymerization conditions, but it should be understood that this is formed by radical polymerization or cation polymerization by methyl alumoxane or alkyl aluminum contained therein.
Such an atactic styrene homopolymer can be easily separated by solvent separation.
In the styrene-ethylene copolymer of the present invention, an isotactic structure having a stereoregularity of a phenyl group of ethylene and styrene alternating copolymer structure is a structure having an isotactic diad index m (or mesodiad index) of higher than 0.75, preferably at least 0.85, more preferably at least 0.95.
The isotactic diad index m of the ethylene-styrene alternating polymerization structure can be calculated from peak area Ar derived from r structure and peak area Am derived from m structure of methylene carbon peak appearing in the vicinity of 25 ppm in accordance with the following formula (iii).

$$m=Am/(Ar+Am) \quad \text{(iii)}$$

There is a case that peak positions are somewhat shifted depending on measurement conditions and a solvent used.

For example, in the case of using chloroform-d as a solvent and being based on TMS, the peak derived from r structure appears in the vicinity of 25.4-25.5 ppm and the peak derived from m structure appears in the vicinity of 25.2-25.3 ppm.

Also, in the case of using tetrachloroethane-d as a solvent and being based on the central peak (73.89 ppm) of triplet of tetrachloroethane-d, the peak derived from r structure appears in the vicinity of 25.3-25.4 ppm and the peak derived from m structure appears in the vicinity of 25.1-25.2 ppm.

The m structure means meso-diad structure, and the r structure means racemi-diad structure.

In the styrene-ethylene copolymer of the present invention, peak attributable to the r structure is not substantially observed in ethylene-styrene alternating structure.

The copolymer of the present invention does not have a crystal structure based on ethylene-styrene alternating structure even after accelerating crystallization by a known method such as annealing, a nucleating agent, a crystallization assistant or the like. Particularly, a crystal diffraction peak attributed to ethylene-styrene alternating structure is not observed by X-ray diffraction method. The crystal diffraction peak based on ethylene-styrene alternating structure means a diffraction peak obtained by using a Cu ray source, which has an intensity at least 3 times higher than noise level in the range of from 15 to 40° of 2θ, and is a diffraction peak having a peak area of at least 1% of halo peak area or a peak having a half band width of at most 3° of 2θ. The X-ray diffraction peak derived from ethylene-styrene alternating structure is disclosed in JP-A-9-309925 and the literatures Macromol. Rapid Commun., vol.19, 327 (1998) and Macromol. Rapid Commun., vol.17, 745 (1996). The copolymer of the present invention may contain a crystal structure derived from polyethylene in a low aromatic vinyl compound content zone (about at most 15 mol%), and may also contain a crystal structure derived from isotactic polystyrene in a high aromatic vinyl compound content zone (about at least 90 mol%).

Further, the aromatic vinyl compound-ethylene copolymer of the present invention does not have a melting point between 70°C and 200°C according to DSC. measurement, and has an aromatic vinyl compound content of preferably from 15 mol% to 85 mol%, more preferably from 40 mol% to 85 mol%. The fact that a melting point is not observed between 70°C and 200°C in accordance with DSC. measurement, means that there is no crystal structure (crystal structure derived from said styrene-ethylene alternating structure and crystal structure derived from polyethylene chain structure and polystyrene chain structure) having a melting point in this temperature range.

Further, the aromatic vinyl compound-ethylene copolymer of the present invention is a styrene-ethylene random copolymer, the styrene content of which is from 15 to 85%, preferably from 40 mol% to 85 mol%, and is characterized in that alternating structure index λ calculated by the formula (i) satisfies the following formula (ii).

$$\lambda = A3/A2 \times 100 \quad \text{Formula (i)}$$

$$\text{in case of } 15 \leqq x < 50 \quad 1 \leqq \lambda < x-10 \quad \text{Formula (ii)}$$

$$\text{in case of } 50 \leqq x \leqq 85 \quad 1 \leqq \lambda < 90-x$$

wherein x is an aromatic vinyl compound content (mol%)

In the formula (i), A3 value represents a total value of areas of three kinds of peaks a, b and c derived from an aromatic vinyl compound-ethylene alternating structure of the following formula (1) in accordance with 13C-NMR measurement, and A2 value represents a total value of peak areas derived from main chain methylene and main chain methine carbons observed in the range of from 0 to 50 ppm in accordance with 13C-NMR measurement based on TMS;

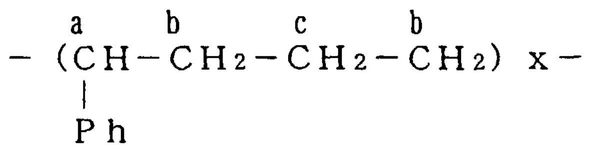

(1)

(wherein Ph is an aromatic group such as a phenyl group, and x represents a number of repeating units and is an integer of at least 2.)

The copolymer of the present invention has a low alternating property and a high random property since the alternating structure index λ value satisfies the formula (ii) in various styrene contents and is less than 40 at the styrene content of 50 mol%.

Therefore, in the copolymer of the present invention, a crystal structure derived from isotactic styrene-ethylene alternating structure is not observed by X-ray diffraction method even after accelerating crystallization by a known method. Further, the copolymer of the present invention is characterized by having no melting point derived from any

crystal structure between 70°C and 200°C in accordance with DSC measurement.

Still further, the copolymer of the present invention is characterized by having various structures therein, such as a chain structure of ethylene, a head-to-tail chain structure of styrene, a structure having a styrene unit and an ethylene unit bonded and the like, in any styrene content ranges. Even when the styrene content in the copolymer is from 50 mol% to 90 mol%, a chain structure of ethylene is observed in accordance with usual 13C-NMR measurement. The copolymer of the present invention having a high styrene content and also having an ethylene chain at random and uniformly in the main chain of the copolymer, is characterized by having non-crystallinity, high impact strength and high transparency.

When the styrene content in the copolymer is low and is from 1 mol% to 50 mol%, two or more head-to-tail styrene chain structures are observed by usual 13C-NMR measurement. The copolymer of the present invention having a head-to-tail styrene chain at random and uniformly in the main chain of copolymer having such a low styrene content, is characterized by destroying crystallinity of polyethylene chain and having high flexibility, high breaking strength and high transparency. In the present invention, an aromatic vinyl compound unit having a head-to-tail chain structure providing the above-mentioned peaks is at least 0.1%, preferably at least 1%, of the total amount of aromatic vinyl compound units contained in the copolymer when the aromatic vinyl compound content is at least 1 mol% and less than 30 mol%.

The amount of the aromatic vinyl compound unit having a head-to-tail chain structure contained in the copolymer is expressed by a ratio x to the total amount of aromatic vinyl compound units and is calculated by the following formula.

$$x = xa/xb \times 100$$

wherein xa is a total value of peak areas derived from the main chain methine carbon of the head-to-tail chain structure of 2 or more aromatic vinyl compound units, for example, a total value of areas of peak (n) observed at 40.4-41.0 ppm and peak (j) observed at 42.3-43.6 ppm in accordance with 13C-NMR measurement based on TMS, and xb is a total value of peak areas derived from the main chain methine carbon of total aromatic vinyl compound units contained in the copolymer.

Further, in the styrene-ethylene random copolymer of the present invention, the stereoregularity of a phenyl group of chain structure of styrene unit is isotactic.

The fact that the stereoregularity of a phenyl group of chain structure of styrene unit is isotactic, means a structure having an isotactic diad index ms (or mesodiad index) of higher than 0.5, preferably at least 0.7, more preferably at least 0.8.

The stereoregularity of chain structure of styrene unit is determined by the peak position of methylene carbon in the vicinity of 43-44 ppm observed by 13C-NMR or the peak position of the main chain proton observed by 1H-NMR.

It is known that the peaks of methylene carbon of a structure derived from inversion bond of styrene of conventional pseudo random copolymer having no stereoregularity are present in two zones of 34.0-34.5 ppm and 34.5-35.2 ppm (see, for example, Polymer Preprints, Japan, vol. 42, 2292 (1993)).

In the styrene-ethylene random copolymer of the present invention, a peak attributed to methylene carbon of inversion bond structure derived from styrene is observed at 34.5-35.2 ppm but is not observed at 34.0-34.5 ppm.

This is one of the characteristics of the copolymer of the present invention, and this means that a high stereoregularity of a phenyl group is maintained even in the inversion bond structure derived from styrene as illustrated by the following formula.

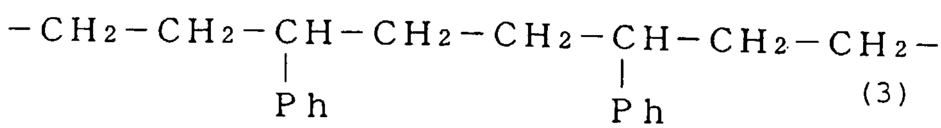

(3)

The styrene-ethylene random copolymer of the present invention has a weight average molecular weight of at least 10,000, preferably at least 30,000, more preferably at least 80,000, and has a practically high molecular weight. The molecular weight distribution (Mw/Mn) is at most 6, preferably at most 4, more preferably at most 3. The copolymer of the present invention, a weight average molecular weight of at most 1,000,000, preferably at most 500,000, in view of its processability.

The weight average molecular weight used herein is determined in terms of molecular weight of polystyrene using standard polystyrene by GPC, and is hereinafter the same.

Further, the styrene-ethylene random copolymer of the present invention is characterized by having ethylene-styrene alternating structure of a high stereoregularity and also having various structures such as ethylene chains of various lengths, inversion bond of styrene and styrene chains of various lengths. Also, in the styrene-ethylene random copolymer of the present invention, the ratio of alternating structure can be variously changed within the range of satisfying the λ value in the above specific formula, depending on a styrene content in the copolymer or polymerization conditions such as polymerization temperature, monomer concentration or the like.

The copolymer of the present invention has various high performances in respect of initial tensile modulus, stiffness, breaking strength, solvent resistance and the like in respective St content ranges and various crystallinities, and therefore has characteristic physical properties as novel non-crystalline resin, thermoplastic elastomer, transparent soft resin or the like.

Further, it is possible to change a glass transition temperature in a wide range by changing a styrene content.

Also, the styrene-ethylene copolymer of the present invention containing no elutable plasticizer and halogen has a basic feature of having a high environmental safety.

The copolymer of the present invention have the following features depending on the respective styrene contents.

The copolymer having a styrene content of from 1 to 10 mol% has high tensile strength and transparency, and is highly flexible and has properties of plastomer or elastomer.

The copolymer having a styrene content of from 10 to 25 mol% has high tensile strength, elongation, transparency, flexibility and recovery property, and has properties of elastomer.

The copolymer of the above composition can be used alone or as an alloy of copolymers having different styrene contents or as an alloy with polyolefins including polypropylene, for example as a stretch film for wrapping.

The copolymer having a styrene content of from 50 mol% to 85 mol% and having micro-crystallinity or a low crystallinity, is a plastic having a high transparency, and has a high shrinking property at a temperature higher than glass transition point and a high size stability at a temperature lower than glass transition point, and is useful for example as a shrink film for wrapping.

Also, it recovers the original shape by heating at a temperature higher than glass transition point and lower than melting point even after changing and fixing its shape by heating at a temperature higher than melting point, quenching to a temperature lower than glass transition point, changing its fixed shape at a temperature higher than glass transition point and lower than melting point and cooling to a temperature lower than glass transition point. That is, it has a shape-memory property.

The copolymer having a styrene content of from 15 to 50 mol% is preferably used as an alloy with other resins such as a polyolefin including polypropylene or polyethylene and polystyrene, or as a partially crosslinked composition, and is satisfactorily used as a substitute for soft vinyl chloride resin. Further, the copolymer of this composition is useful as a compatibilizer for polyolefin and styrene type resin, and additive for styrene type resin and polyolefin type resin, a modifier for rubber, a component for adhesive agent and bitumen (additive for asphalt).

The glass transition point of the copolymer of the present invention can be varied in the range of from -40°C to 90°C by varying a styrene content, and the copolymer of the present invention has a high tangent δ peak in viscoelastic spectrum, and is therefore useful as a vibration damper applicable in a wide temperature range.

The above explanation was made by taking a styrene-ethylene copolymer as a typical example for the aromatic vinyl compound-ethylene copolymer of the present invention. However, the above explanation is applicable to generic aromatic vinyl compound-ethylene copolymer using the above aromatic vinyl compound.

Also, depending on polymerization conditions, the copolymer of the present invention sometimes contains a small amount of atactic homopolymer obtained by heat-, radical- or cation-polymerization of an aromatic vinyl compound, but its amount is at most 10 wt% of the total weight. Such a homopolymer can be removed by extraction with solvent, but the copolymer containing such a homopolymer can be used as it is, provided that it does not raise any problem in respect of physical properties. Further, in order to modify or improve physical properties, it is possible to blend with other polymers. Also, it is possible to blend copolymers of the present invention having respectively different styrene contents.

The aromatic vinyl compound-ethylene copolymer of the present invention can be prepared by a polymerization catalyst comprising a metallocene compound and a cocatalyst illustrated below.

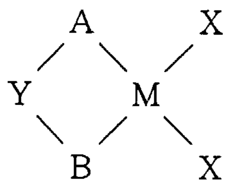

(4)

In the above formula, A is an unsubstituted or substituted cyclopentaphenanthryl group of the following formula ka-7 or ka-8.

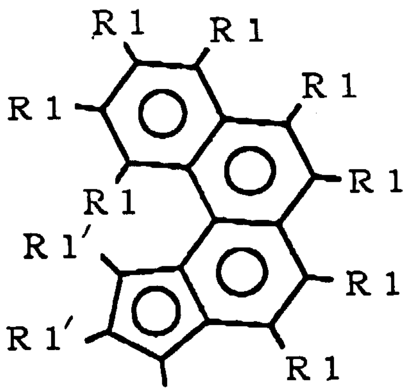

ka-7

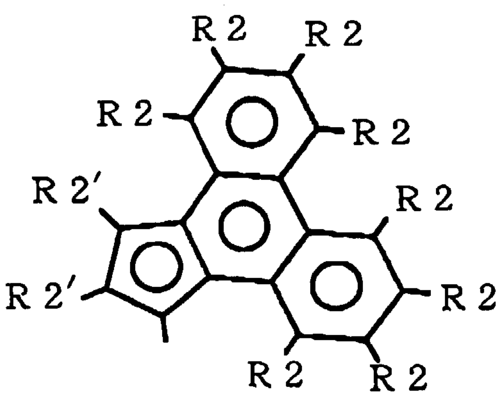

ka-8

(In the above formulas ka-7 and ka-8, each of R1 and R2 is hydrogen, a $C_{1-20}$ alkyl group, a $C_{6-10}$ aryl group, a $C_{7-20}$ alkylaryl group, a halogen atom, $OSiR_3$, $SiR_3$ or $PR_2$ (wherein each R is a $C_{1-10}$ hydrocarbon group), provided that the plurality of R1 and the plurality of R2 may be the same or different, respectively, and each pair of adjacent R1 and adjacent R2 may, together with the atoms joining them, form a 5- to 8-membered aromatic or aliphatic ring. $R^{1'}$ and $R^{2'}$ are respectively the same as $R^1$ and $R^2$, but are preferably hydrogen.)

Examples of the unsubstituted cyclopentaphenanthryl group include a 3-cyclopenta(c)phenanthryl group or a 1-cyclopenta[1]phenanthryl group.

B is an unsubstituted or substituted cyclopentaphenanthryl group of the same chemical formulas as A or an unsubstituted or substituted benzindenyl group, or an unsubstituted or substituted cyclopentadienyl group, an unsubstituted or substituted indenyl group or an unsubstituted or substituted fluorenyl group as illustrated in the following ka-12, ka-13 or ka-14.

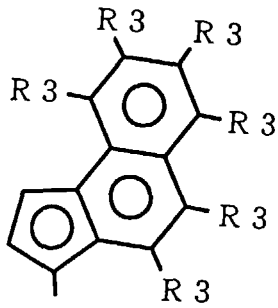

ka-9

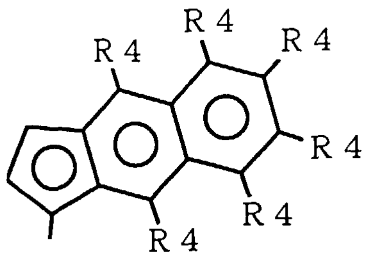

ka-10

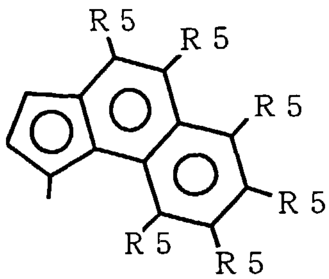

ka-11

(In the above formulas ka-9 to ka-11, each of R3, R4 and R5 is hydrogen, a $C_{1-20}$ alkyl group, a $C_{6-10}$ aryl group, a $C_{7-20}$ alkylaryl group, a halogen atom, $OSiR_3$, $SiR_3$ or $PR_2$ (wherein each R is a $C_{1-10}$ hydrocarbon group), provided that the plurality of R3, the plurality of R4 and the plurality of R5 may be the same or different, respectively, and each pair of adjacent R3, adjacent R4 and adjacent R5 may, together with the atoms joining them, form a 5- to 8-membered aromatic or aliphatic ring, except for the case of forming an unsubstituted cyclopentaphenanthrene group.)

Examples of the unsubstituted benzoindenyl group include 4,5-benzo-1-indenyl (another name: benzo(e)indenyl), 5,6-benzo-1-indenyl or 6,7-benzo-1-indenyl, and Examples of the substituted benzoindenyl group include an α-acenaphto-1-indenyl group and the like.

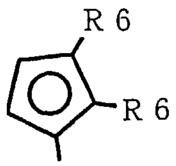

ka 12

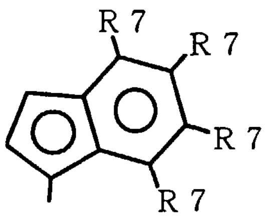

ka-13

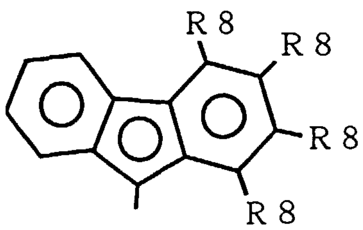

ka-14

(In the above formulas ka-12, ka-13 and ka-14, each of R6, R7 and R8 is hydrogen, a $C_{1-20}$ alkyl group, a $C_{6-10}$ aryl group, a $C_{7-20}$ alkylaryl group, a halogen atom, $OSiR_3$, $SiR_3$ or $PR_2$ (wherein each R is a $C_{1-10}$ hydrocarbon group), provided that the plurality of R6, the plurality of R7 and the plurality of R8 may be the same or different, respectively.)

When both A and B are an unsubstituted or substituted cyclopentaphenanthryl group, the two may be the same or different.

In the preparation of the copolymer of the present invention, it is most preferable that both A and B are unsubstituted or substituted cyclopentaphenanthryl groups.

The unsubstituted cyclopentadienyl may, for example, be cyclopentadienyl, and the substituted cyclopentadienyl may, for example, 4-aryl-1-cyclopentadienyl, 4,5-diaryl-1-cyclopentadienyl, 5-alkyl-4-aryl-1-cyclopentadienyl, 4-alkyl-5-aryl-1-cyclopentadienyl, 4,5-dialkyl-1-cyclopentadienyl, 5-trialkylsilyl-4-alkyl-1-cyclopentadienyl, or 4,5-dialkylsilyl-1-cyclopentadienyl.

The unsubstituted indenyl group may, for example, be 1-indenyl, and the substituted indenyl group may, for example, be 4-alkyl-1-indenyl, 4-aryl-1-indenyl, 4,5-dialkyl-1-indenyl, 4,6-dialkyl-1-indenyl, 5,6-dialkyl-1-indenyl, 4,5-diaryl-1-indenyl, 5-aryl-1-indenyl, 4-aryl-5-alkyl-1-indenyl, 2,6-dialkyl-4-aryl-1-indenyl, 5,6-diaryl-1-indenyl, or 4,5,6-triaryl-1-indenyl.

The unsubstituted fluorenyl group may, for example, be a 9-fluorenyl group, and the substituted fluorenyl group may, for example, be a 7-methyl-9-fluorenyl group or a benz-9-fluorenyl group.

In the above formula (4), Y is carbon, silicon, boron or an ethylene group which has bonds to A and B and which has substituents, and it is a methylene group, a silylene group, boron-containing group or a 1,2-ethylene group having, as substituents, hydrogen or a $C_{1-15}$ hydrocarbon group. The substituents may be the same or different from each other. Further, Y may have a cyclic structure such as a cyclohexylidene group or a cyclopentylidene group.

Preferably, Y is a substituted methylene group which has bonds to A and B and which is substituted by hydrogen or a $C_{1-15}$ hydrocarbon group. The hydrocarbon group may, for example, be an alkyl group, an aryl group, a cycloalkyl group or a cycloaryl group. The substituents may be the same or different from each other.

Particularly preferably, Y is $-CH_2-$, $-CMe_2-$, $-CEt_2-$, $-CPh_2-$, cyclohexylidene or cyclopentylidene. Here, Me is a

methyl group, Et is an ethyl group and Ph is a phenyl group.

X is hydrogen, a halogen atom, a $C_{1-15}$ alkyl group, a $C_{6-10}$ aryl group, a $C_{8-12}$ alkylaryl group, a silyl group having a $C_{1-4}$ hydrocarbon substituent, a $C_{1-10}$ alkoxy group, or a dialkylamide group having a $C_{1-6}$ alkyl substituent. The halogen atom may, for example, be chlorine or bromine, the alkyl group may, for example, be a methyl group or an ethyl group, and the aryl group may, for example, be a phenyl group. The alkylaryl group may, for example, be a benzyl group, the silyl group may, for example, be trimethylsilyl, the alkoxy group may, for example, be a methoxy group, an ethoxy group or an isopropoxy group, and the dialkylamide group may, for example, be a dimethylamide group.

M is zirconium, hafnium or titanium. Particularly preferred is zirconium.

The following compounds may be mentioned as specific examples of such a transition metal catalyst component, in addition to substituted methylene-bridged transition metal compounds as illustrated in EP0872497A2.

For example, dimethylmethylenebis(3-cyclopenta[c]phenanthryl)zirconium dichloride, dimethylmethylenebis(3-cyclopenta[c]phenanthryl)zirconiumbisdimethylamide, di-n-propylmethylenebis(3-cyclopenta[c]phenanthryl)zirconium dichloride, di-i-propylmethylenebis(3-cyclopenta[c]phenanthryl)zirconium dichloride, cyclohexylidenebis(3-cyclopenta[c]phenanthryl)zirconium dichloride, cyclopentylidenebis(3-cyclopenta[c]phenanthryl)zirconium dichloride, diphenylmethylenebis(3-cylcopenta[c]phenanthryl)zirconium dichloride, dimethylmethylene(4,5-benzo-1-indenyl)(3-cylcopenta[c]phenanthryl)zirconium dichloride, dimethylmethylene(5,6-benzo-1-indenyl)(3-cyclopenta[c]phenanthryl)zirconium dichloride, dimethylmethylene(6,7-benzo-1-indenyl)(3-cyclopenta[c]phenanthryl)zirconium dichloride, dimethylmethylene(cyclopentadienyl)(3-cyclopenta[c]phenanthryl)zirconium dichloride, dimethylmethylene(1-indenyl)(3-cyclopenta[c]phenanthryl)zirconium dichloride, dimethylmethylene(1-fluorenyl)(3-cyclopenta[c]phenanthryl)zirconium dichloride, dimethylmethylene(4-phenyl-1-indenyl)(3-cyclopenta[c]phenanthryl)zirconium dichloride, dimethylmethylene(4-naphthyl-1-indenyl)(3-cyclopenta[c]phenanthryl)zirconium dichloride, dimethylmethylene(3-cyclopenta[c]phenanthryl)(4,5-naphto-1-indenyl)zirconium dichloride, dimethylmethylene(3-cyclopenta[c]phenanthryl)($\alpha$-acenaphto-1-indenyl)zirconium dichloride, dimethylmethylenebis(1-cyclopenta[l]phenanthryl)zirconium dichloride, dimethylmethylenebis(1-cyclopenta[l]phenanthryl)zirconiumbisdimethylamide, di-n-propylmethylenebis(1-cyclopenta[l]phenanthryl)zirconium dichloride, di-i-propylmethylenebis(1-cyclopenta[l]phenanthryl)zirconium dichloride, cyclohexylidenebis(1-cyclopenta[l]phenanthryl)zirconium dichloride, cyclopentylidenebis(1-cyclopenta[l]phenanthryl)zirconium dichloride, diphenylmethylenebis(1-cyclopenta[l]phenanthryl)zirconium dichloride, diphenylmethylene (4,5-benzo-1-indenyl)(1-cyclopenta[l]phenanthryl)zirconium dichloride, diphenylmethylene(5,6-benzo-1-indenyl)(1-cyclopenta[l]phenanthryl)zirconium dichloride, diphenylmethylene(6,7-benzo-1-indenyl)(1-cyclopenta[l]phenanthryl)zirconium dichloride, methylmethylene(cyclopentadienyl)(1-cyclopenta[l]phenanthryl)zirconium dichloride, dimethylmethylene(1-indenyl)(1-cyclopenta[l]phenanthryl)zirconium dichloride, dimethylmethylene(1-fluorenyl)(1-cyclopenta[l]phenanthryl)zirconium dichloride, dimethylmethylene(4-phenyl-1-indenyl)(1-cyclopenta[l]phenanthryl)zirconium dichloride, dimethylmethylene(4-naphthyl-1-indenyl)(1-cyclopenta[l]phenanthryl)zirconium dichloride, dimethylmethylene(1-cyclopenta[l]phenanthryl)(4,5-naphtho-1-indenyl)zirconium dichloride, dimethylmethylene(1-cyclopenta[l]phenanthryl)($\alpha$-acenaphtho-1-indenyl)zirconium dichloride, dimethylmethylene(1-cyclopenta[l]phenanthryl)(3-cyclopenta[c]phenanthryl)zirconium dichloride, and the like.

In the foregoing, zirconium complexes were exemplified, but corresponding titanium complexes and hafnium complexes may also suitably be used. Further, racemic-form or mixture of racemic-form and meso-form may also be employed. Preferably, racemic-form or pseudo racemic-form are employed. In such a case, D-isomers or L-isomers may be employed.

As a cocatalyst to be used in the present invention, a cocatalyst which has been used in combination with a transition metal compound as a catalyst component, can be used. As such a cocatalyst, aluminoxane (or alumoxane), or a boron compound, is preferably employed.

Further, the cocatalyst to be used is preferably an aluminoxane (or alumoxane) of the following formula (5) or (6):

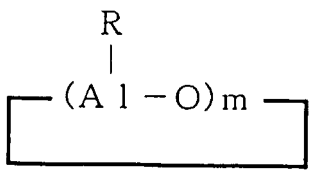

(5)

wherein R is a $C_{1-5}$ alkyl group, a $C_{6-10}$ aryl group or hydrogen, m is an integer of from 2 to 100, and the plurality of R may be the same or different,

$$R'-(\underset{\underset{}{}}{\overset{\overset{\displaystyle R'}{|}}{Al}}-O)_n-\overset{\overset{\displaystyle R'}{|}}{Al}-R' \qquad (6)$$

wherein R' is a $C_{1-5}$ alkyl group, a $C_{6-10}$ aryl group or hydrogen, n is an integer of from 2 to 100, and the plurality of R' may be the same or different.

As the aluminoxane, methylalumoxane, ethylalumoxane or triisobutylalumoxane, is preferably employed. Particularly preferred is methylalumoxane. If necessary, a mixture of these different types of alumoxanes, may be employed. Further, such an alumoxane may be used in combination with an alkylaluminum such as trimethylaluminum, triethylaluminum or triisobutylaluminum, or with a halogen-containing alkylaluminum such as dimethylaluminum chloride.

Addition of an alkylaluminum to the catalyst is effective for removing substances which hinder polymerization, such as a polymerization inhibitor in styrene, or moisture in the solvent, or for removing adverse effects against the polymerization reaction.

However, it is not necessarily required to add an alkylaluminum, if the amount of a polymerization inhibitor or the like is preliminarily reduced to a level not to influence the polymerization, by a known method such as distillation of styrene, solvent or the like, bubbling with a dry inert gas or passing through a molecular sieve, or by increasing the amount of alumoxane to some extent or adding alumoxane in divided portions.

In the present invention, a boron compound may be used as a cocatalyst together with the above transition metal compound.

The boron compound to be used as a cocatalyst may, for example, be illustrated in EP0872492A2.

Such a boron compound and the above-mentioned organoaluminum compound may be used at the same time. Especially when a boron compound is used as a cocatalyst, addition of an alkylaluminum compound such as triisobutylaluminum is effective for the removal of impurities which adversely affect the polymerization, such as water contained in the polymerization system.

Aromatic vinyl compounds to be used in the present invention may, for example, be styrene and various substituted styrenes such as p-methylstyrene, m-methylstyrene, o-methylstyrene, o-t-butylstyrene, m-t-butylstyrene, p-t-butylstyrene, p-chlorostyrene, o-chlorostyrene, and $\alpha$-methylstyrene. Further, a compound having a plurality of vinyl groups in one molecule, such as divinylbenzene, may also be mentioned. Also, vinyl naphthalene, vinyl anthracene or the like may be used.

Industrially preferably, styrene, p-methylstyrene or p-chlorostyrene is used. Particularly preferably, styrene is used.

Further, in addition to an aromatic vinyl compound and ethylene, other monomers as a third component may be copolymerizable in the preparation of the copolymer of the present invention so long as it does not give an adverse effect. Examples of the third monomer include a $C_2$-$C_{20}$ $\alpha$-olefin such as ethylene, propylene, 1-butene, 1-hexene, 4-methyl-1-pentene or 1-octetene, or a cyclic olefin such as cyclopentene, norbornene or norbornadiene. These olefins may be used in a mixture of two or more. Further, dienes such as butadiene, 1,4-hexadiene, 1,5-hexadiene, ethylidenenorbornene or dicyclopentadiene can be suitably used as a third monomer. The content of these dienes is preferably from 0.05 mol% to 5 mol%.

For the production of a copolymer of the present invention, ethylene, the above exemplified aromatic vinyl compound, a third monomer, if necessary, a transition metal catalyst component as a metal complex and a cocatalyst are contacted. As to the manner and order for contacting, an optional known method may be employed.

As a method for the above polymerization or copolymerization, it is possible to employ a method for carrying out the polymerization in a liquid monomer without using any solvent, or a method of using a single solvent or a mixed solvent selected from saturated aliphatic or aromatic hydrocarbons or halogenated hydrocarbons, such as pentane, hexane, heptane, cyclohexane, benzene, toluene, ethylbenzene, xylene, chlorobenzene, chlorotoluene, methylene chloride or chloroform. If necessary, batch polymerization, continuous polymerization, stepwise polymerization, slurry polymerization, preliminary polymerization or gas phase polymerization may be employed.

Heretofore, when styrene is employed as a monomer component, it used to be impossible to employ gas phase polymerization in view of its low vapor pressure. However, when a catalyst of the present invention comprising a transition metal compound as a catalyst component for polymerization and a cocatalyst, is employed, the copolymerization ability of styrene will be remarkably high, whereby copolymerization is possible even at a low styrene monomer concentration. Namely, copolymerization of an olefin with styrene is possible even under a low styrene partial pressure under a gas phase polymerization condition. In such a case, the transition metal catalyst component for polymerization and the cocatalyst may be used as supported on a suitable known carrier.

The polymerization or copolymerization temperature is suitably from -78°C to 200°C. A polymerization temperature lower than -78°C is industrially disadvantageous, and if the temperature exceeds 200°C, decomposition of the metal complex is likely to take place, such being undesirable. Industrially more preferably, the temperature is from 0°C to 160°C, particularly from 30 to 160°C.

The pressure for copolymerization is suitably from 0.1 to 1,000 atm, preferably from 1 to 50 atm, industrially particularly preferably, from 1 to 30 atm.

When an organoaluminum compound (alumoxane) is used as a cocatalyst, it is preferably used in an aluminum atom/complex metal atom ratio of from 0.1 to 100,000, preferably from 10 to 10,000, relative to the metal of the complex. If the ratio is smaller than 0.1, the metal complex can not effectively be activated, and if it exceeds 100,000, such will be economically disadvantageous.

When a boron compound is used as a cocatalyst, it is used in an atomic ratio of boron atom/complex metal atom of from 0.01 to 100, preferably from 0.1 to 10, particularly preferably 1. If the atomic ratio is less than 0.01, the metal complex can not effectively be activated, and if it exceeds 100, such is economically disadvantageous.

The metal complex and the cocatalyst may be prepared by mixing them outside the polymerization tank, or they may be mixed in the tank during polymerization.

EXAMPLES

Now, the present invention will be described in further detail with reference to Examples. However, it should be understood that the present invention is by no means restricted to such specific Examples.

In the following description, Cp represents a cyclopentadienyl group, Ind a 1-indenyl group, BInd a 4,5-benz-1-indenyl group, Flu a 9-fluorenyl group, Me a methyl group, Et an ethyl group, tBu a tertiary butyl group, and Ph a phenyl group.

The analyses of the copolymers obtained in the respective Examples and Comparative Examples were carried out by the following methods.

The 13C-NMR spectrum was measured using TMS as standard, by using α-500 manufactured by Nippon Denshi Kabushiki Kaisha and using a chloroform-d solvent or a 1,1,2,2-tetrachloroethane-d2 solvent. Here, the measurement using TMS as standard is the following measurement. Firstly, using TMS as standard, the shift value of the center peak of the triplet 13C-NMR peak of 1,1,2,2-tetrachloroethane-d2 was determined. Then, the copolymer was dissolved in the tetrachloroethane, and the 13C-NMR was measured, and each peak shift value was calculated using the triplet center peak of the tetrachloroethane as standard. The shift value of the triplet center peak of the tetrachloroethane was 73.89 ppm.

The 13C-NMR spectrum measurement for quantitative analysis of peak areas, was carried out by a proton gate decoupling method having NOE erased, by using pulses with a pulse width of 45° and a repeating time of 5 seconds as standard.

When the measurement was carried out under the same conditions except that the repeating time was changed to 1.5 seconds, the measured values of peak areas of the copolymer agreed to the values obtained in the case where the repeating time was 5 seconds, within a measurement error range.

The styrene content in the copolymer was determined by 1H-NMR. As the apparatus, α-500 manufactured by Nippon Denshi Kabushiki Kaisha and AC-250 manufactured by BRUCKER Co. were used. The determination was made by comparing the intensity of the peak (6.5 to 7.5 ppm) attributable to the proton of a phenyl group and the proton peak (0.8 to 3 ppm) attributable to an alkyl group, measured by using TMS as standard and chloroform-d or 1,1,2,2-tetrachloroethane-d2 as a solvent.

The molecular weights in Examples are obtained by GPC (gel permeation chromatography) as calculated as standard polystyrene.

A copolymer soluble in THF at room temperature, was measured by means of HLC-8020, manufactured by TOSOH CORPORATION using THF as a solvent.

A copolymer insoluble in THF at room temperature, was measured at 145°C by means of HLC-8121 apparatus manufactured by TOSOH CORPORATION using o-dichlorobenzene as a solvent.

The DSC measurement was carried out with 10 mg of a sample treated at 60 to 70°C for about 10 hours, by using DSC200, manufactured by Seiko Denshi K.K. in a nitrogen stream at a temperature raising rate of 20°C/min from room temperature to 250°C to confirm presence or absence of melting point between 70°C and 250°C (1st-run). The sample was maintained at 250°C for 10 minutes, and was then quenched with liquid nitrogen, and was then heated from -100°C to 280°C at a temperature raising rate of 10°C/min to measure glass transition point (Tg) (2nd-run).

The X-ray diffraction was measured by means of MXP-18 model high power X-ray diffraction apparatus, source Cu rotating anode (wavelength: 1.5405Å), manufactured by Mac Science Company.

Tensile modulus of elasticity, tensile breaking extension and tensile strength at break were measured in accordance with JIS K 7113 by molding to form a sheet having a thickness of 1 mm by heat-press method (200°C, 4

minutes, 50 kg/cm$^2$G) and punching to prepare a sample of No. 2 dumbbell-like shape.

Total light transmittance and haze were measured in accordance with JIS K-7105 by using a sample of 1 mm sheet formed in the same manner as mentioned above and using a turbidity meter NDH2000 manufactured by Nihon Denshoku Kogyo K.K.

Surface hardness (Shore A, D hardness) was measured in accordance with JIS K-7215.

TEST EXAMPLES

Preparation A of transition metal compound

Rac-dimethylmethylenebis(3-cyclopenta[c]phenanthryl)zirconium dichloride (another name: rac-{CpPhen-CMe$_2$-CpPhen}ZrCl$_2$) of the following formula was prepared by the following method. CpPhen represents cyclopenta[c]phenanthryl.

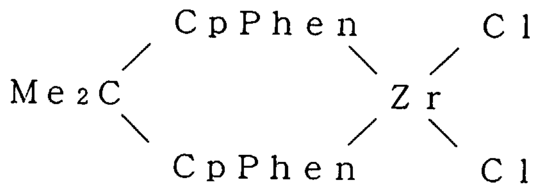

1H or 3H-cyclopenta[c]phenanthrene was prepared in accordance with the method disclosed in Organometallics, 16, 3413 (1997).

A-1 Preparation of isopropylidenebis(cyclopenta[c]phenanthrene)

In an Ar atmosphere, 32 mmol of 1H or 3H-cyclopenta[c]phenanthrene was added to 40 ml of dimethoxyethane having 3.0 g of potassium hydroxide suspended, and the resultant mixture was stirred at room temperature for 30 minutes, and 15 mmol of acetone was added thereto, and the resultant mixture was stirred at 60°C for 2 hours.

By adding 10% aqueous phosphoric acid to neutralize, the reaction mixture was extracted with methylene chloride, and an organic phase was washed with water and dried, and methylene chloride was distilled off. By recrystallization from methylene chloride-diethyl ether solution, 1.5 g of white crystal isopropylidenebis(cyclopenta[c]phenanthrene) was obtained.

From the 1H-NMR spectrum measurement, it was found to have peaks at 1.93 ppm (6H,s), 4.20 ppm (4H,d), 6.89 ppm (2H,t), 7.5-7.9 ppm (14H,m) and 8.91 ppm (2H,d).

The measurement was carried out using TMS as standard and $CDCl_3$ as a solvent.

A-3 Preparation of rac-dimethylmethylenebis(3-cyclopenta[c]phenanthryl)zirconium dichloride

In an Ar stream, 2.0 mmol of isopropylidenebis(cyclopenta[c]phenanthrene), 2.0 mmol of zirconium tetrakisdimethylamide, {$Zr(NMe_2)_4$} and 20 ml of toluene were charged, and the resultant mixture was stirred for 7 hours under reflux conditions. Under a reduced pressure, toluene was distilled off, and 50 ml of methylene chloride was added thereto, and the mixture was cooled to -50°C. 4.0 mmol of dimethylamine hydrochloride was gradually added thereto, and the temperature was slowly raised to room temperature, and the mixture was further stirred for 2 hours. After distilling off the solvent, a solid obtained was washed with pentane and further with a small amount of methylene chloride to remove a meso-form and a ligand, thereby obtaining 0.36 g of a yellow orange crystal of rac-dimethylmethylenebis(3-cyclopenta[c]phenanthryl)zirconium dichloride.

From the 1H-NMR spectrum measurement, it was found to have peaks at 2.55 ppm (6H,s), 6.49 ppm (2H,d), 7.55-8.02 ppm (16H,m) and 8.82 ppm (2H,d).

The measurement was carried out using TMS as standard and $CDCl_3$ as a solvent.

EXAMPLE 1

(Preparation of styrene-ethylene random copolymer)

Rac-dimethylmethylenebis(3-cyclopenta[c]phenanthryl)zirconium dichloride prepared by Preparation A of the above transition metal catalyst component was used as a catalyst, and polymerization was carried out under the conditions shown in the following Table 1.
The polymerization was carried out by using an autoclave of 10ℓ equipped with a stirrer and a jacket for heating and cooling.
800 ml of dehydrated toluene and 4,000 ml of dehydrated styrene were charged therein, and the resultant mixture was heat-stirred at an inner temperature of 50°C. The reaction system was purged by bubbling about 100ℓ of nitrogen, and 8.4 mmol of triisobutyl aluminum and 84 mmol (in terms of Al) of methyl alumoxane (NMAO-3A manufactured by TOSOH AKZO Co.) were added thereto. The content of the autoclave was substituted by immediately introducing ethylene, and after stably fixing to a pressure of 0.1 MPa (0 kg/$cm^2$G, atmospheric pressure), about 50 ml of toluene solution having 21 μmol of rac-dimethylmethylenebis(3-cyclopenta[c]phenanthryl)zirconium dichloride (catalyst obtained in Preparation A of the above transition metal catalyst component) and 0.84 mmol of triisobutyl aluminum dissolved was added to the autoclave from a catalyst tank equipped above the autoclave. By maintaining an internal temperature of 50°C and a pressure of 0.1 MPa, polymerization was carried out for 2.5 hours. After polymerization, the polymerization liquid thus obtained was gradually added in a small amount into an excess amount of methanol vigorously stirred to precipitate a polymer. Under a reduced pressure, the reaction product was dried at 60°C until no weight change was observed, thereby obtaining 504 g of a polymer.

EXAMPLES 2 to 7 (except for Example 3)

The same polymerization procedure as in Example 1 was carried out under the conditions shown in following Table 1.
PMAO or MMAO manufactured by TOSOH-AKZO Co. was used.

EXAMPLE 3

Polymerization was carried out by using a polymerization tank having a volume of 150ℓ, equipped with a stirrer and a jacket for heating and cooling.
36ℓ of dehydrated cyclohexane and 36ℓ of dehydrated styrene were charged, and the resultant mixture was heat-stirred at an internal temperature of about 50°C. 84 mmol of triisobutyl aluminum and 840 mmol (in terms of Al) of methyl alumoxane (MMAO-3A manufactured by TOSOH-AKZO Co.) were added thereto. After immediately introducing ethylene and after stably fixing a pressure to 0.3 MPa (2 kg/$cm^2$G), from a catalyst tank equipped above the polymerization tank, about 100 ml of toluene solution having 105 μmol of rac-dimethylmethylenebis(3-cyclopenta[c]phenanthryl)zirconium dichloride (the above transition metal catalyst component A) and 10 mmol of triisobutyl aluminum dissolved was added into the polymerization tank. Thereafter, by maintaining a temperature of about 50°C and a pressure of 0.2 MPa, polymerization was carried out for 3.0 hours.
After polymerization, the polymerization liquid thus obtained was degassed, and was treated in accordance with crumb-forming method as illustrated below, thereby recovering a polymer.
The polymerization liquid was diluted with 72ℓ of cyclohexane, and the resultant mixture was charged into 300ℓ water heated at 85°C containing a vigorously stirred dispersant (Pluronic: tradename) over 2 hours. Thereafter, the mixture was stirred at 97°C for 1 hour, and hot water containing crumb was charged into cooled water to recover the crumb. The crumb thus obtained was dried in air at 50°C, and was then degassed under vacuum at 60°C to obtain 9.5 kg of a satisfactory polymer of crumb-shape having a size of about several mm.

(Preparation B of transition metal catalyst component)

Rac-dimethylmethylene(3-cyclopenta[c]phenanthryl)(1-indenyl)zirconium dichloride (another name: rac{CpPhen-$CMe_2$-Ind}$ZrCl_2$) was prepared in the following manner. CpPhen represents cyclopenta[c]phenanthryl).

B-1 Preparation of 1,1-isopropylidene-3-cyclopenta[c]phenanthrene

Preparation of 6,6-diphenylfulvene was carried out in accordance with the description of Can. J. Chem., vol. 62, 1751 (1984). However, as starting materials, acetone was used in place of benzophenone and 1H or 3H-cyclopenta[c]phenanthrene was used in place of cyclopentadiene.

B-2 Preparation of isopropylidene(1-indene)3-cyclopenta[c]phenanthrene)

In an Ar atmosphere, 14 mmol of indene was dissolved in 50 ml of THF, and an equivalent amount of BuLi was added thereto at 0°C, and the resultant mixture was stirred for about 10 hours. 20 ml of THF having 14 mmol of 1,1-isopropylidene-3-cyclopenta[c]phenanthrene dissolved was added thereto, and the mixture was stirred at 0°C to room temperature overnight. 50 ml of water and 100 ml of diethyl ether were added thereto, and the mixture was shaked to separate an organic phase, and the organic phase thus separated was washed with saturated salt water and was then dried with sodium sulfate, and the solvent was distilled off under reduced pressure. The product thus obtained was further purified by a column to obtain isopropylidene (1-indene)(3-cyclopenta[c]phenanthrene). The yield was 32%.

B-3 Preparation of rac-dimethylmethylene(3-cyclopental[c]phenanthryl)(1-indenyl)zirconium dichloride

The aimed product was prepared in the same manner as in Preparation A-3 of rac-dimethylmethylenebis(3-cyclopenta[c]phenanthryl)zirconium dichloride. The obtained product was yellow orange powder and the yield was 28%.
According to the 1H-NMR spectrum measurement, it was found to have peaks at 2.43 ppm (3H,s), 2.47 ppm (3H,s), 6.28 ppm (1H,d), 6.36 ppm (1H,d), 6.71(1H,dd), 7.08-7,97 ppm (12H,m) and 8.88 ppm (1H,d).
Chloroform H peak in chloroform-d was observed at 7.254 ppm, and the peak of impurity toluene was observed at 2.3499 ppm. The measurement was carried out using $CDCl_3$ as a solvent.

EXAMPLE 8

By using 8.4 µmol of rac{CpPhen-$CMe_2$-Ind}$ZrCl_2$ obtained in Preparation B of transition metal catalyst component as a catalyst, polymerization was carried out under the conditions shown in the following Table 1.

REFERENCE EXAMPLE 1

The result of polymerization of styrene alone conducted by using a catalyst used in Example 1 is shown in the following Table 2. Thus, it is proved that the catalyst of the present invention is satisfactory also for polymerization of styrene alone.

COMPARATIVE EXAMPLES 1 to 2

By using rac isopropylidenebisindenylzirconium dichloride, rac{Ind-$C(Me)_2$-Ind}$ZrCl_2$, as a catalyst, polymerization was carried out under the conditions shown in the following Table 1.
Table 1 shows the results and the polymerization conditions of respective Examples and Comparative Examples.

Table 1

| Examples | Catalyst | Catalyst amount (μmol) | Cocatalyst (mmol) MAO | Solvent amount (ml) | Styrene amount (ml) | Ethylene pressure (MPa) | Polymerization pressure (°C) | Polymerization time (h) | Yield (g) | Productivity (g/mol-cat)/$10^6$ | St content (mol%) |
|---|---|---|---|---|---|---|---|---|---|---|---|
| Example 1 | A | 21 | M84 | T800 | 4000 | 0.1 | 50 | 2.5 | 504 | 24.0 | 60.0 |
| Example 2 | A | 84 | M84 | T800 | 4000 | 0.08 | 50 | 4.0 | 740 | 8.8 | 70.0 |
| Example 3 | A | 105 | M840 | C36L | 36L | 0.3 | 50 | 3.0 | 9.5 kg | 91 | 53.5 |
| Example 4 | A | 8.4 | P8.4 | T2000 | 2800 | 1.1 | 70 | 2.0 | 570 | | 45.0 |
| Example 5 | A | 8.4 | P21 | T4000 | 800 | 1.1-0.5 | 70-92 | 0.5 | 675 | 80 | 9.1 |
| Example 6 | A | 8.4 | P8.4 | T4000 | 800 | 1.1-0.9 | 70-79 | 0.5 | 553 | 66 | 5.5 |
| Example 7 | A | 8.4 | P8.4 | T4000 | 800 | 1.1 | 50-62 | 0.5 | 543 | 65 | 4.3 |
| Example 8 | B | 8.4 | P8.4 | T4000 | 800 | 1.1 | 70 | 3.0 | 470 | 56 | 7.0 |
| Reference Example | A | 1.0 | 8.4 | T16 | 10 | - | 23 | 3 | 1.8 | 1.8 | 100 |
| Comp. Example 1 | C | 84 | 84 | T800 | 4000 | 0.6 | 50 | 4 | 1660 | 20 | 43.5 |
| Comp. Example 2 | C | 84 | 84 | T800 | 4000 | 0.2 | 50 | 7 | 1220 | 15 | 49.3 |

P; PMAO, M; MMAO, T; toluene, C; cyclohexane

Transition metal compounds used as catalysts:

A: rac-dimethyl methylene(bis)(3-cyclopenta[c]phenanthryl)zirconium dichloride

B: rac-dimethyl methylene(bis)(3-cyclopenta[c]phenanthryl)(1-indenyl)zirconium dichloride

C: rac-dimethyl methylene(bis)(1-indenyl)zirconium dichloride

Table 2 shows styrene contents, molecular weights measured by GPC, glass transition points measured by DSC and melting points of the polymers obtained.

Table 2

| Examples and Comparative Examples | St content (mol%) | $Mw/10^4$ | Mw/Mn | Glass transition temperature (°C) | Melting point (°C) |
|---|---|---|---|---|---|
| Example 1 | 60.0 | 28.4 | 2.4 | 58 | Melting point was not observed. |
| Example 2 | 70.0 | 24.6 | 2.2 | 56 | Melting point was not observed. |
| Example 3 | 53.5 | 23.0 | 2.2 | 49 | Melting point was not observed. |
| Example 4 | 45.0 | 18.0 | 2.2 | 22 | Melting point was not observed. |
| Example 5 | 9.1 | 12.1 | 2.2 | -21 | 93 |
| Example 6 | 5.5 | 10.0 | 2.1 | -26 | 103 |
| Example 7 | 4.3 | 11.7 | 2.1 | -24 | 105 |
| Example 8 | 7.0 | 11.6 | 2.0 | -24 | 93 |
| Reference | 100 | 20.8 | 1.7 | 90 | 225 |
| Example | | | | | |
| Comparative Example 1 | 43.5 | 14.8 | 2.0 | Unmeasured | 94,107 |
| Comparative Example 2 | 49.3 | 15.5 | 1.8 | Unmeasured | 91 |

Figures 1 and 2 illustrate a GPC chart and a DSC chart of the copolymer obtained in Example 1 as a typical example of the styrene-ethylene copolymer of the present invention. In the GPC measurement of a polymer obtained in each Example, the GPC curves obtained by different detectors (RI and UV) correspond to each other within an error range of experiment as illustrated in Figure 1, and this fact proves that the copolymer obtained has quite uniform composition distribution.

Also, the glass transition point determined by DSC is one as illustrated in Table 2, and this fact also proves that the copolymer has uniform composition.

Each copolymer obtained in each Example was press-molded at 180°C, and was subjected to annealing at 50°C for 1 week, and was subjected to X-ray diffraction analysis, the results of which are shown in the following Table 4. With regard to each copolymer of each Example of the present invention, a diffraction peak derived from ethylene-styrene alternating structure was not observed. However, with regard to a copolymer having a styrene content of about at most 15 mol%, a diffraction peak derived from ethylene chain structure (polyethylene) crystal was observed. On the other hand, with regard to each copolymer of each Comparative Example, a diffraction peak derived from ethylene-styrene alternating structure was clearly observed.

Figure 3 illustrates a diffraction spectrum of the annealed copolymer of Example 1, and Figure 4 illustrates a diffraction spectrum of a copolymer having a crystal structure derived from ethylene-styrene alternating structure.

Table 5 shows physical properties of a copolymer sample obtained in Example 1 and a copolymer sample annealed at 50°C for 1 week. The annealing treatment did not cause any substantial change in mechanical properties, hardness, transparency and the like. Also, it is evident that the copolymer of the present invention has a high transparency and a low haze before and after annealing treatment.

Figures 5 and 6 illustrate 13C-NMR spectra of polymers obtained in Examples 2 and 5.

The styrene-ethylene random copolymer of the present invention is a copolymer capable of containing the following typical structures illustrated by the following formulas at an optional ratio.

In the methine and methylene carbon zones of 13C-NMR spectrum, peaks attributed to the following carbons are observed. a-o are reference marks representing carbons illustrated in chemical formulas ka-17 to ka-25.

On the basis of a triplet center peak (73.89 ppm) of tetrachloroethane-d, peaks attributed to the following carbons are illustrated.

(1) Styrene-ethylene alternating structure

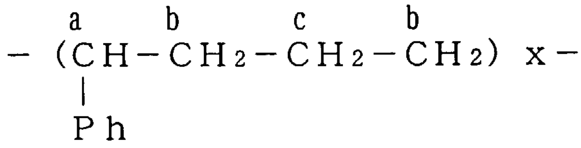

(1)

(In the above formula, Ph is a phenyl group, and x represents a number of repeating units and is an integer of at least 2.)

Thus, a structure expressed by the following formula, which comprises methine carbons bonded to phenyl groups and three methylene carbons sandwiched therebetween, is illustrated.

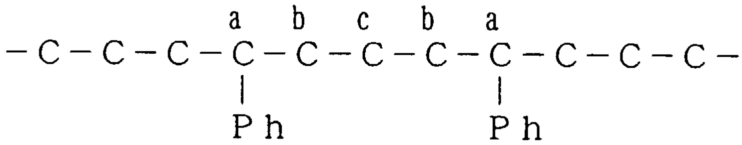

ka-17

In the following formulas, hydrogen atoms were omitted for simplification.

(2) Ethylene chain structure

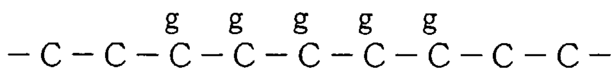

ka-18

(3)structure comprising ethylene chain and styrene one unit

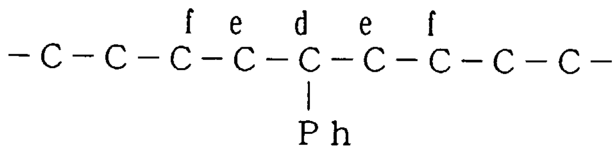

ka-19

(4) Structure comprising styrene unit inversion (tail-to-tail structure)

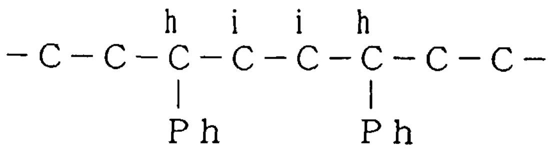

ka-20

(5) Structure comprising ethylene unit or head-to-tail chain of ethylene chain and two styrene units

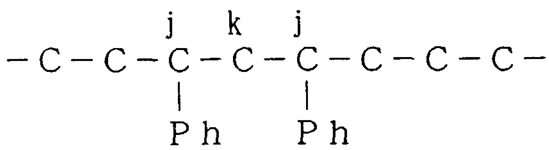

ka-21

Or structure having styrene unit and styrene-ethylene alternating structure unit bonded at random.

Styrene unit

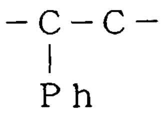

ka-22

Alternating structure unit

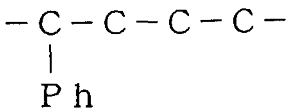

ka-23

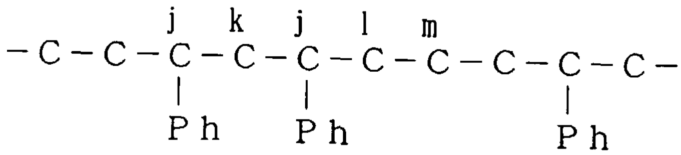

ka-24

(6) Structure comprising head-to-tail chain of at least 3 styrene units

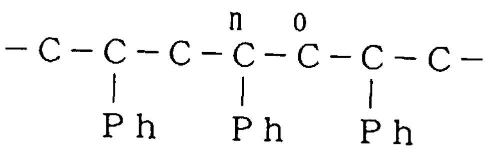

ka-25

25.1-25.2 ppm (c)
36.4-36.5 ppm (b)
44.8-45.4 ppm (a)
29.4-29.9 ppm (g)
36.5-36.8 ppm (e)
27.2-27.6 ppm (f)
45.4-46.1 ppm (d,h)
34.5-34.9 ppm (i)
42.3-43.6 ppm (j)
43.7-44.5 ppm (k)
35.6-36.1 ppm (l)
24.0-24.9 ppm (m)

40.4-41.0 ppm (n)
43.0-43.6 ppm (o)

The above-mentioned peaks sometimes make a shift, a micro structure of peak or a peak shoulder due to influences by measurement conditions, solvent conditions and a long distance effect from an adjacent structure.
These peaks were determined by peak shift estimation as described in Macromolecules, vol. 13, 849 (1980), J. Appl. Polymer Sci., vol. 53, 1453 (1994), J. Polymer Phys. Ed., vol. 13, 901 (1975), Macromolecules, vol. 10, 773 (1977), EP Patent 416815, JP-A-4-130114, 13C-NMR Inadequate method, DEPT method and 13C-NMR data base STN (Specinfo).
Table 3 illustrates 13C-NMR peak positions of a copolymer obtained in each Example.
A structure index λ value of a copolymer obtained in each Example was determined in accordance with the above formula (i). λ values and m values obtained with regard to each Example and Comparative Example are shown in the following Table 6.
Isotactic diad (mesodiad) index m of alternating structure was determined in accordance with the above formula (iii).
By carrying out 13C-NMR measurement, a peak derived from head-to-tail styrene chain structure can be clearly observed.
A ratio x of an aromatic vinyl compound unit amount (derived from head-to-tail chain structure of aromatic vinyl compound unit contained in a copolymer) to the total aromatic vinyl compound unit amount was determined by the following formula.

$$x = xa/xb \times 100$$

In the above formula, xa is a total value of peak areas derived from main chain methine carbons of head-to-tail chain structures of two or more aromatic vinyl compound units. For example, in the 13C-NMR measurement based on TMS, a total value of peak (n) observed at 40.4-41.0 ppm and peak (j) observed at 42.3-44.6 ppm.
xb is a total value of peak areas derived from main chain methine carbons of total aromatic vinyl compound units contained in a copolymer.
The following Table 6 shows a x value of a copolymer of each Example.

Table 3 Main peak shift value (ppm) by 13C-NMR using tetrachloroethane-d as a solvent

| Attribution | Example 1 | Example 2 | Example 3 | Example 4 | Example 5 | Example 6 | Example 7 | Example 8 |
|---|---|---|---|---|---|---|---|---|
| n | | | | | Note 1) | | | |
| Note 2 | 40.4-40.7 | 40.6-40.9 | 40.5-40.8 | 40.5-40.9 | - | - | - | - |
| Note 3 | - | - | - | - | - | - | - | - |
| o | | | | | | | | |
| Note 2 | 43.0-43.4 | 43.0-43.5 | 43.0-43.6 | 43.1-43.5 | - | - | - | - |
| Note 3 | - | - | - | - | - | - | - | - |
| j | 42.3-42.7 | 42.4-42.7 | 42.6-42.7 | 42.7-42.9 | 43.1,43.4 | 42.9 | 43.3 | - |
| k | 43.7-44.1 | 43.8-44.1 | 43.8-44.3 | 43.9-44.4 | 44.2 | 44.3 | 43.9-44.4 | - |

Note 1): Clear peaks could not be observed by 13C-NMR measurement (about 10,000 times integration) conducting usual determination of Examples.

Note 2) m, mm, mmm or mmmm, Note 3) r, rr, rrr or rrrr

Sample was measured by heat-dissolving at about 100°C and using tetrachloroethane-d as a solvent.

The center peak of triplet 13C-NMR peak of tetrachloroethane showed a shift value of 73.89 ppm to TMS. Each peak shift value of copolymers was determined by taking the triplet center peak value of tetrachloroethane as 73.89 ppm.

Table 4

| Examples and Comparative Examples | St content (mol%) | Results of X-ray diffraction |
|---|---|---|
| Example 1 | 60.0 | No diffraction peak was observed. |
| Example 2 | 70.0 | No diffraction peak was observed. |
| Example 3 | 53.5 | No diffraction peak was observed. |
| Example 4 | 45.0 | No diffraction peak was observed. |
| Example 5 | 9.1 | Diffraction peak derived from polyethylene crystal was observed. |
| Example 6 | 5.5 | Diffraction peak derived from polyethylene crystal was observed. |
| Example 7 | 4.3 | Diffraction peak derived from polyethylene crystal was observed. |
| Example 8 | 7.0 | Diffraction peak derived from polyethylene crystal was observed. |
| Reference Example | 100 | Diffraction peak derived from isotactic polystyrene crystal was observed. |
| Comparative Example 1 | 43.5 | Diffraction peak derived from Et-St alternating structure crystal was observed. |
| Comparative Example 2 | 49.3 | Diffraction peak derived from Et-St alternating structure crystal was observed. |

Table 5

| | Copolymer prepared in Example 1 (before annealing) | Copolymer prepared in Example 1 (after annealing) |
|---|---|---|
| Breaking elongation (%) | 6 | 6 |
| Yield strength (MPa) | Yield point was not observed. | Yield point was not observed. |
| Breaking point strength (MPa) | 31.5 | 32.8 |
| Tensile elastic modulus (MPa) | 804 | 907 |
| Haze (%) | 14.5 | 14.1 |
| Total light transmittance (%) | 85.2 | 85.9 |
| Hardness (shore-D) | 63 | 61 |
| Hardness (shore-A) | 98 | 98 |

Table 6

| Examples and Comparative Examples | St content (mol%) | λ value | m value | x value |
|---|---|---|---|---|
| Example 1 | 60.0 | 20 | >0.95 | about 60 |
| Example 2 | 70.0 | 18 | >0.95 | about 70 |
| Example 3 | 53.5 | 33 | >0.95 | 29 |
| Example 4 | 45.0 | 30 | >0.95 | 23 |

Table 6 (continued)

| Examples and Comparative Examples | St content (mol%) | λ value | m value | x value |
|---|---|---|---|---|
| Example 5 | 9.1 | 4 | >0.95 | 5 |
| Example 6 | 5.5 | 3 | >0.95 | 3 |
| Example 7 | 4.3 | 2 | >0.95 | 2 |
| Example 8 | 7.0 | 3 | >0.95 | Unmeasured |
| Comp. Example 1 | 43.5 | 51 | >0.95 | Unmeasured |
| Comp. Example 2 | 49.3 | 59 | >0.95 | Unmeasured |

In the 13C-NMR measurement, peaks derived from two or more head-to-tail styrene chain structures were observed. The aromatic vinyl compound-ethylene copolymer of the present invention provides a clear peak derived from head-to-tail styrene chain structure, which can be observed even by usual 13C-NMR measurement (about 20,000 times integration), even when a styrene content is less than 10 mol%.

Further, the aromatic vinyl compound-ethylene copolymer of the present invention is a copolymer having a high random property (low alternating property), the λ value of which satisfies the formula (ii).

The present invention provides an aromatic vinyl compound-ethylene copolymer having the following features:

(1) An aromatic vinyl compound content is from 1 mol% to 99 mol%;
(2) An aromatic vinyl compound unit-ethylene unit alternating structure has a stereoregularity having an isotactic diad index of at least 0.75; and
(3) Even after sufficiently subjecting to crystallization, a crystallinity derived from an aromatic vinyl compound-ethylene alternating structure is not observed. The aromatic vinyl compound-ethylene copolymer of the present invention further has a head-to-tail chain structure of two or more aromatic vinyl compound units, and an alternating structure index λ value satisfies a specific formula (the above-mentioned formula (ii)). Thus, the present invention provides a non-crystalline aromatic vinyl compound-ethylene random copolymer having a high random property (low alternating property), which is quite useful in various industrial fields.

**Claims**

**1.** An aromatic vinyl compound-ethylene copolymer having the following features:

(1) an aromatic vinyl compound content is from 1 mol% to 99 mol%.
(2) an aromatic vinyl compound unit-ethylene unit alternating structure has a stereoregularity having an isotactic diad index of at least 0.75; and
(3) even after sufficiently subjecting to crystallization, a crystallinity derived from an aromatic vinyl compound-ethylene alternating structure is not observed except for a styrene-ethylene random copolymer having a styrene content of 57.0 mol%, a molecular weight (Mw) of 279.000, a molecular weight distribution (Mw/Mn) of 2.9, a glass transition point of 40°C, and an isotactic diad index of at least 0.95.

**2.** The aromatic vinyl compound-ethylene copolymer according to Claim 1, characterized by having a head-to-tail chain structure of 2 or more aromatic vinyl compound units.

**3.** The aromatic vinyl compound-ethylene copolymer according to Claim 1, wherein the aromatic vinyl compound content is from 15 mol% to 85 mol% and a melting point is not observed between 70°C to 200°C by DSC measurement.

**4.** The aromatic vinyl compound-ethylene copolymer according to Claim 3, wherein the aromatic vinyl compound content is from 50 mol% to 85 mol%.

**5.** The aromatic vinyl compound-ethylene copolymer according to Claim 3, wherein an alternating structure index λ calculated by the following formula (i) satisfies the following formula (ii);

$$\lambda = A3/A2 \times 100 \qquad \text{Formula (i)}$$

in case of $15 \leqq x < 50$ $\quad 1 \leqq \lambda < x-10$ $\quad$ Formula (ii)

in case of $50 \leqq x \leqq 85$ $\quad 1 \leqq \lambda < 90-x$

wherein x is an aromatic vinyl compound content (mol%), and in the formula (i), an A3 value is a total value of areas of three kinds of peaks a, b and c derived from an aromatic vinyl compound-ethylene alternating structure of the following formula (1) in accordance with 13C-NMR measurement, and an A2 value is a total value of peak areas derived from main chain methylene and main chain methine carbons observed in the range of from 0 to 50 ppm in accordance with 13C-NMR measurement based on TMS;

$$-(\overset{a}{C}H(Ph)-\overset{b}{C}H_2-\overset{c}{C}H_2-\overset{b}{C}H_2)_x- \qquad (1)$$

wherein Ph is an aromatic group, and x represents a number of repeating units and is an integer of at least 2.

**6.** The aromatic vinyl compound-ethylene copolymer according to Claim 2, characterized by having a peak at 40-45 ppm observed by 13C-NMR measurement based on TMS.

**7.** The aromatic vinyl compound-ethylene copolymer according to Claim 2, characterized by having a head-to-tail chain structure of an aromatic vinyl compound unit having peaks at 40.4-41.0 ppm, 42.3-43.6 ppm, 43.0-43.6 ppm and 43.7-44.5 ppm observed by 13C-NMR measurement based on TMS.

**8.** The aromatic vinyl compound-ethylene copolymer according to Claim 2, characterized by having a head-to-tail chain structure of an aromatic vinyl compound unit having peaks at 42.3-43.6 ppm and 43.7-44.5 ppm observed by 13C-NMR measurement based on TMS.

**9.** The aromatic vinyl compound-ethylene copolymer according to Claim 2, wherein the aromatic vinyl compound unit having a head-to-tail chain structure is at least 0.1% of the total amount of aromatic vinyl compound units contained in the copolymer and the aromatic vinyl compound content is at least 1 mol% and less than 30 mol%.

**10.** The aromatic vinyl compound-ethylene copolymer according to Claim 1, characterized by having a weight average molecular weight of at least 10,000 in terms of molecular weight of standard polystyrene and a molecular weight distribution (Mw/Mn) of at most 6.

**11.** A method for producing the aromatic vinyl compound-ethylene copolymer as defined in Claim 1, characterized by using a polymerization catalyst comprising a metallocene compound and a cocatalyst.

FIG. 1

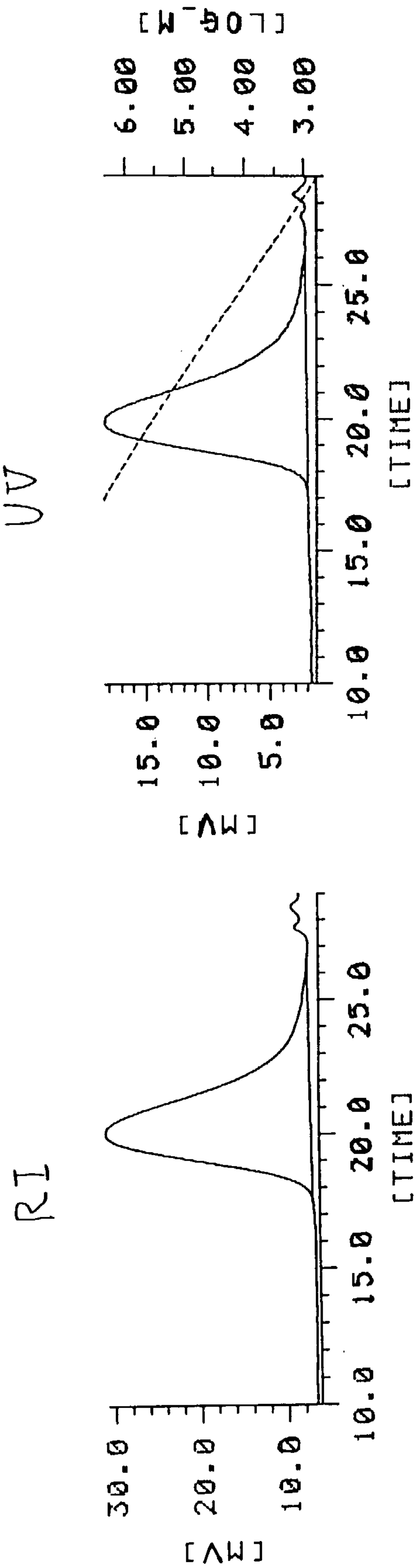
RI
[MV]
30.0
20.0
10.0
10.0
15.0
20.0
25.0
[TIME]
UV
[MV]
15.0
10.0
5.0
10.0
15.0
20.0
25.0
[TIME]
[LOG_M]
6.00
5.00
4.00
3.00

F I G. 2

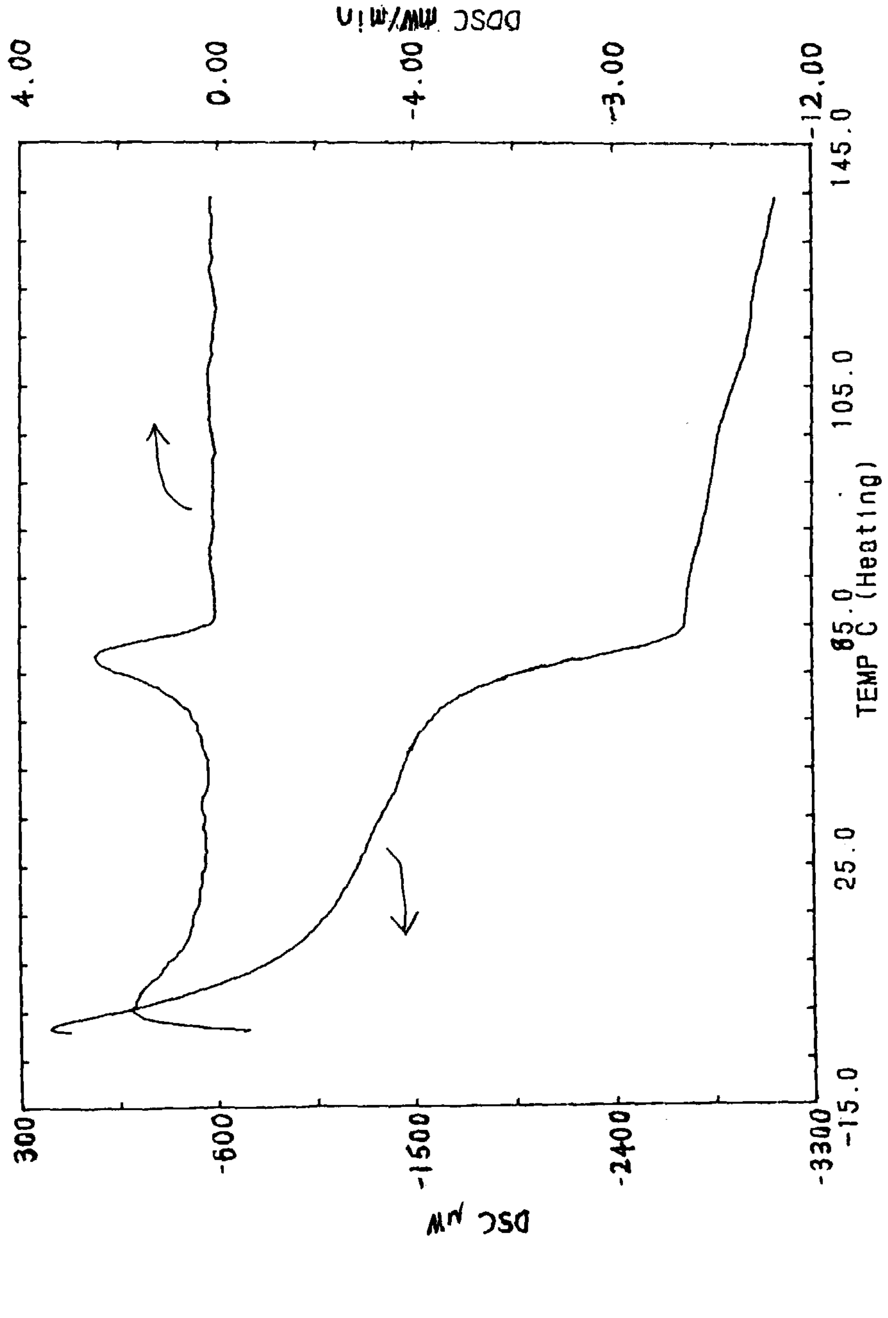
DDSC mW/min
4.00
0.00
-4.00
-3.00
-12.00
145.0
105.0
65.0
TEMP C (Heating)
25.0
-15.0
300
-600
-1500
-2400
-3300
DSC mW

FIG. 3

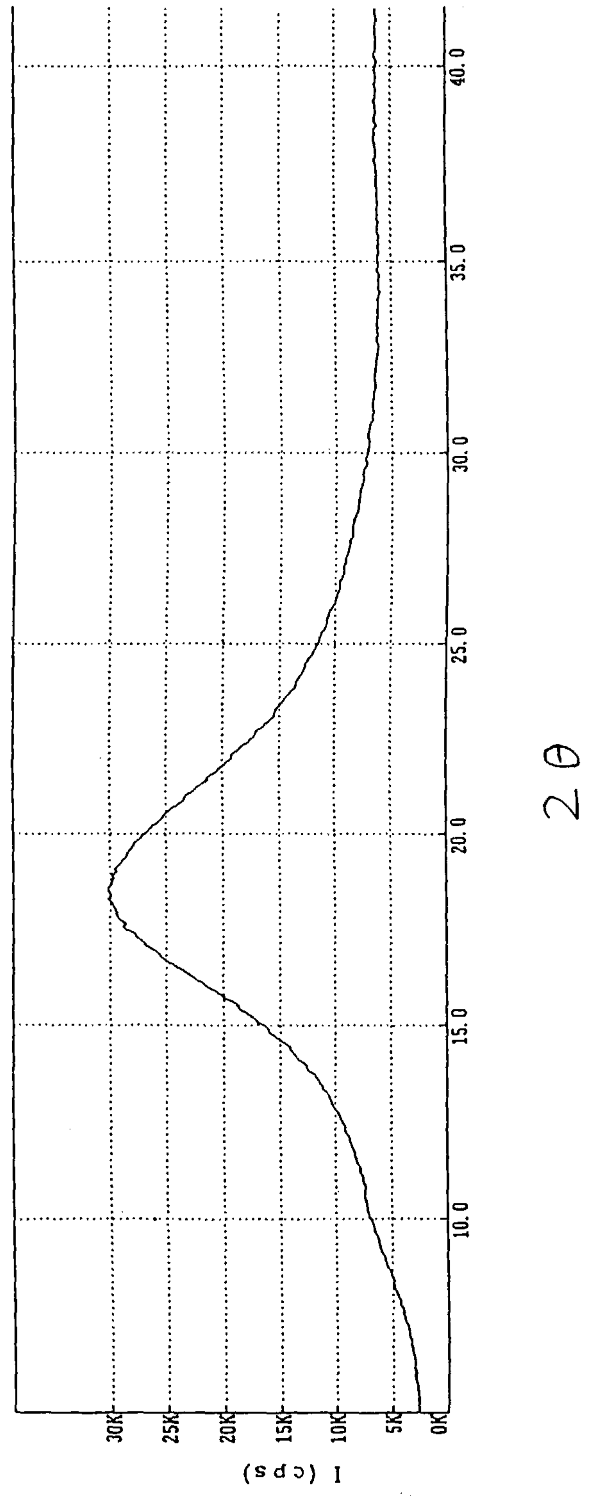

FIG. 4

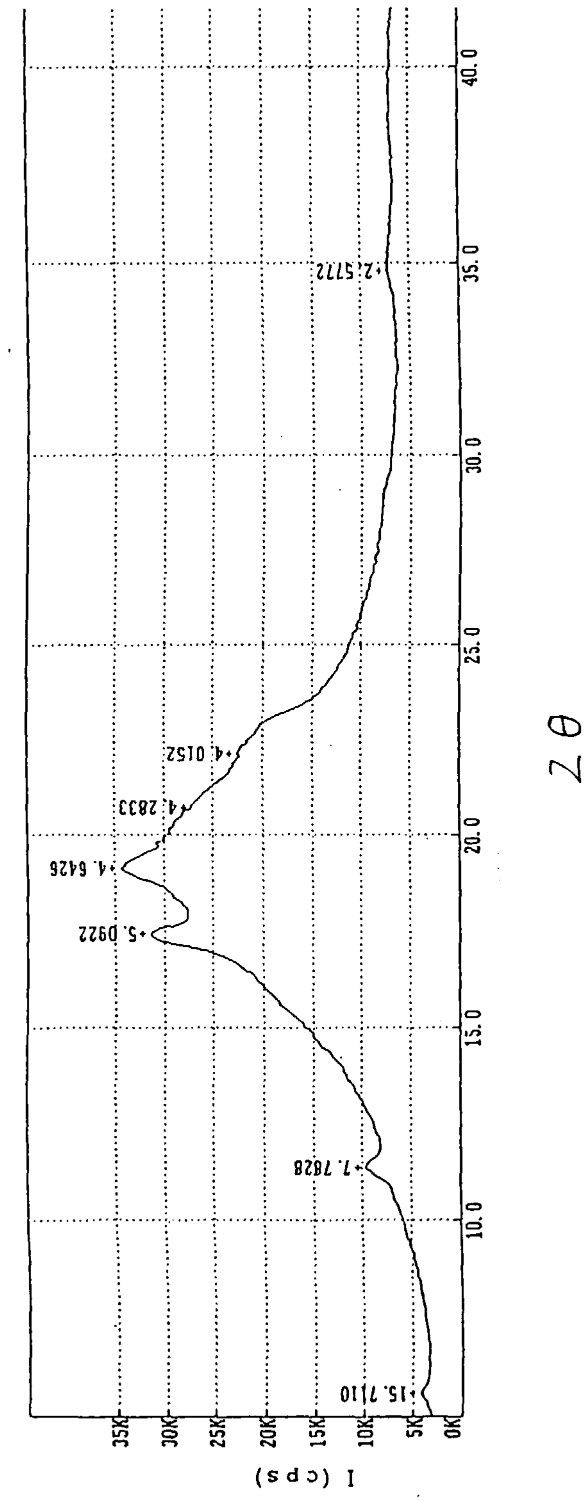

I (cps)
0K
5K
10K
15K
20K
25K
30K
35K
10.0
15.0
20.0
25.0
30.0
35.0
40.0
15.7110
7.7828
5.0922
4.6426
4.2833
4.0152
2.5772
2θ

FIG. 5

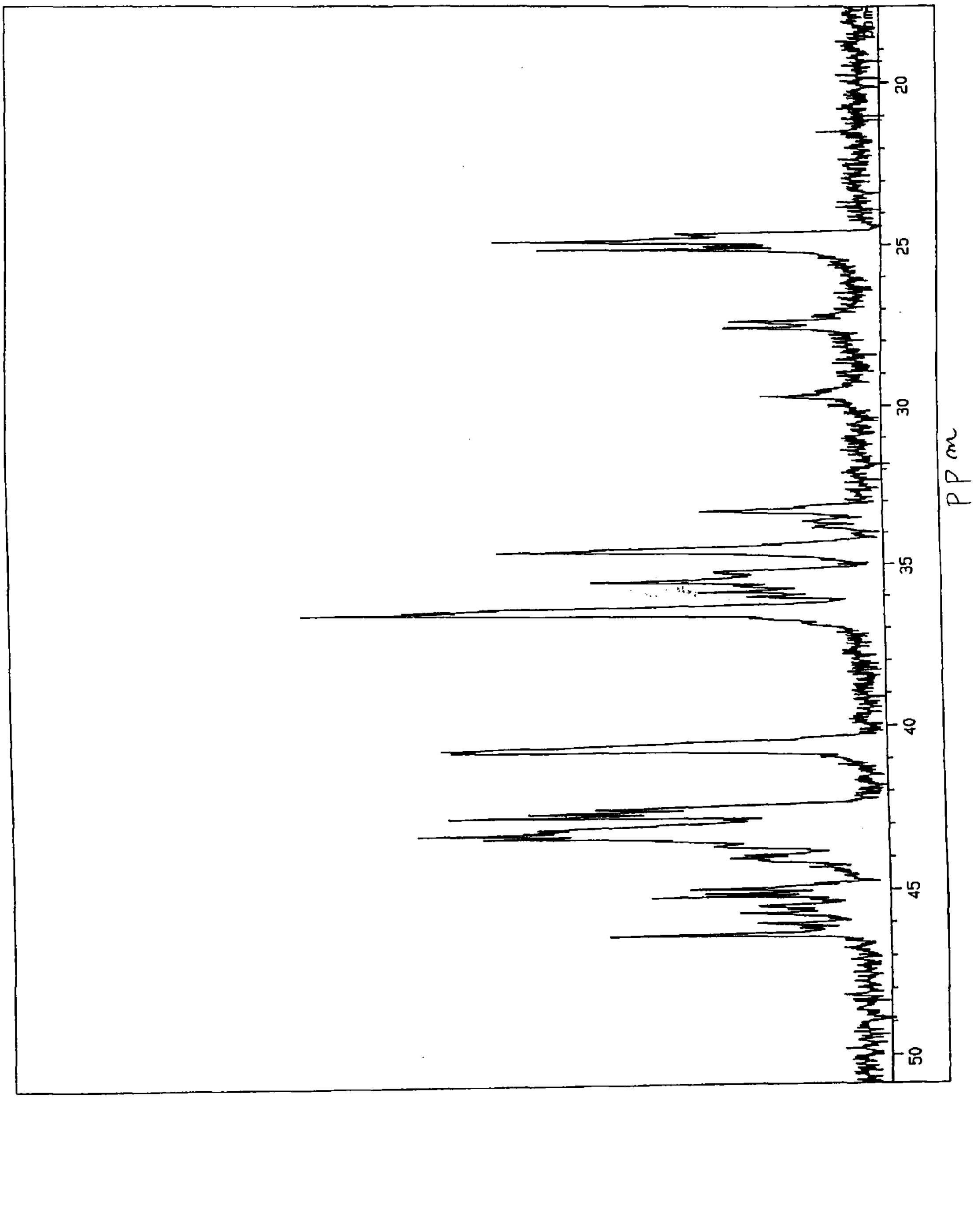

FIG. 6

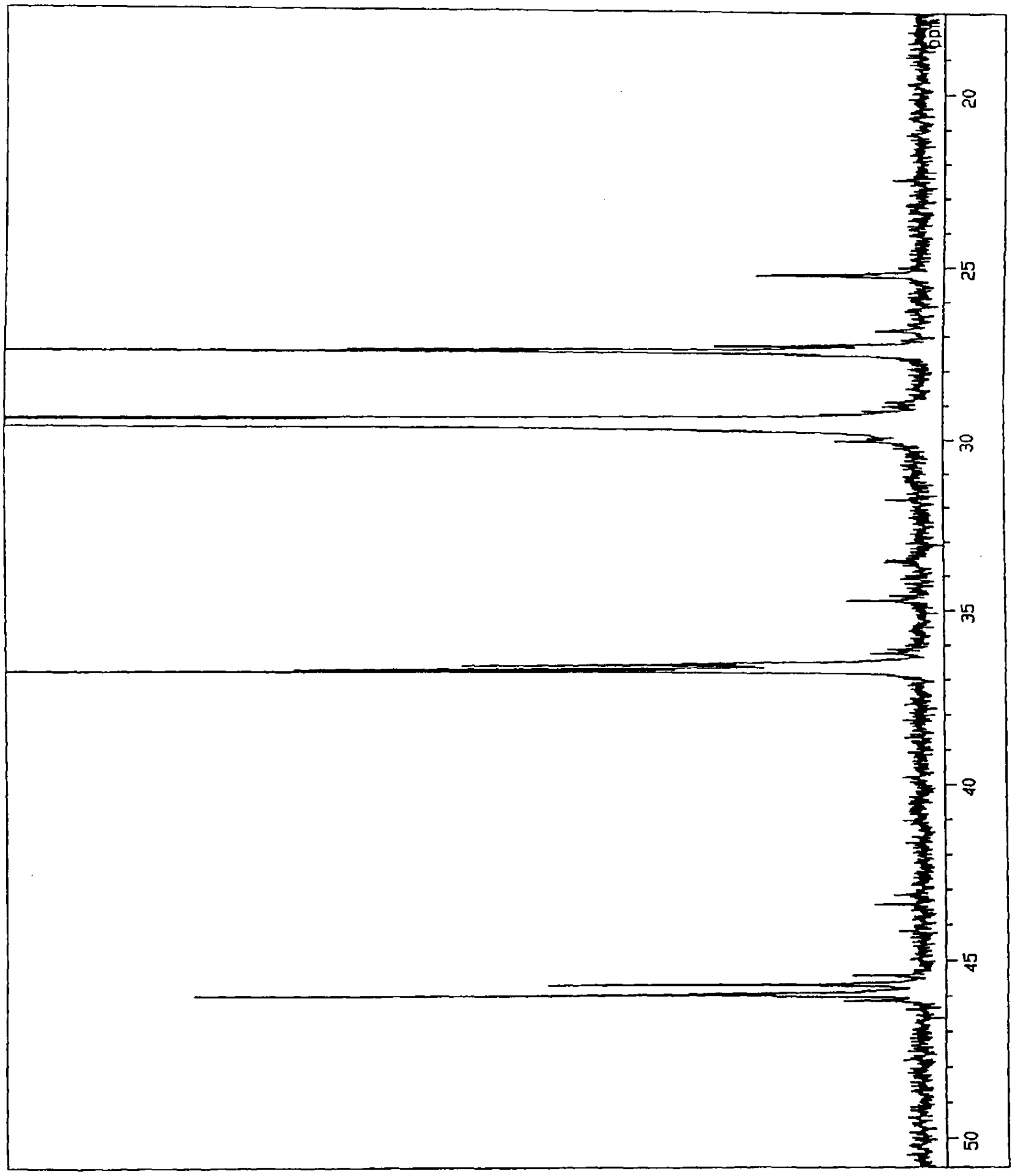

European Patent Office

# EUROPEAN SEARCH REPORT

Application Number
EP 99 11 7558

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X<br><br><br>X | DE 197 11 339 A (DENKI KAGAKU KOGYO KK)<br>30 October 1997 (1997-10-30)<br>* the whole document *<br>& JP 09 309925 A (DENKI KAGAKU KOGYO K.K.) | 1-11<br><br><br>1-11 | C08F212/08<br>C08F210/02<br>//(C08F210/02, 212:08) |
| P,D,<br>X | EP 0 872 492 A (DENKI KAGAKU KOGYO KK)<br>21 October 1998 (1998-10-21)<br>* claims; examples * | 1-11 | |
| D,A<br><br><br><br>A | EP 0 416 815 A (DOW CHEMICAL CO)<br>13 March 1991 (1991-03-13)<br>* page 9, line 27 - page 11, line 33; claims; examples 2,9,10,89,102 *<br>& JP 03 163088 A (THE DOW CHEMICAL COMPANY) | 1-11 | |
| D,A<br><br><br>A | EP 0 405 446 A (SUMITOMO CHEMICAL CO)<br>2 January 1991 (1991-01-02)<br>* claims; examples *<br>& JP 03 250007 A (SUMITOMO CHEMICAL COMPANY) | 1-11 | TECHNICAL FIELDS SEARCHED (Int.Cl.7) |
| X | SERNETZ, F.G. ET AL: "Copolymerization of Ethylene with Styrene Using Different Methylalumoxane Activated Half-Sandwich Complexes"<br>JOURNA OF POLYMER SCIENCE PART A: POLYMER CHEMISTRY,<br>vol. 35, no. 8, 1997, pages 1571-1578, XP002124938<br>* page 1571 - page 1578 *<br><br>-/-- | 1-10 | C08F |

The present search report has been drawn up for all claims

| Place of search | Date of completion of the search | Examiner |
|---|---|---|
| THE HAGUE | 20 December 1999 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 99 11 7558

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | ARAI T ET AL: "STEREOREGULAR AND BERNOULLIAN COPOLYMERIZATION OF STYRENE AND ETHYLENE BY BRIDGED METALLOCENE CATALYSTS" MACROMOLECULAR: RAPID COMMUNICATIONS,DE,WILEY VCH, WEINHEIM, vol. 19, no. 6, page 327-331 XP000777591 ISSN: 1022-1336 * page 327 - page 331 * ----- | 1-11 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 20 December 1999 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 11 7558

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-1999

| Patent document cited in search report | Publication date | Patent family member(s) | Publication date |
|---|---|---|---|
| DE 19711339 A | 30-10-1997 | JP 9309925 A | 02-12-1997 |
| | | US 5883213 A | 16-03-1999 |
| EP 0872492 A | 21-10-1998 | CN 1196357 A | 21-10-1998 |
| | | JP 11130808 A | 18-05-1999 |
| EP 0416815 A | 13-03-1991 | AT 156827 T | 15-08-1997 |
| | | AU 645519 B | 20-01-1994 |
| | | AU 6203990 A | 07-03-1991 |
| | | CA 2024333 A | 01-03-1991 |
| | | DE 69031255 D | 18-09-1997 |
| | | DE 69031255 T | 05-03-1998 |
| | | DE 774468 T | 02-06-1999 |
| | | EP 0764653 A | 26-03-1997 |
| | | EP 0764664 A | 26-03-1997 |
| | | EP 0764654 A | 26-03-1997 |
| | | EP 0774468 A | 21-05-1997 |
| | | EP 0765888 A | 02-04-1997 |
| | | ES 2106020 T | 01-11-1997 |
| | | HK 1001918 A | 17-07-1998 |
| | | HU 209316 B | 28-04-1994 |
| | | JP 2684154 B | 03-12-1997 |
| | | JP 7053618 A | 28-02-1995 |
| | | JP 2623070 B | 25-06-1997 |
| | | JP 7070223 A | 14-03-1995 |
| | | JP 2535249 B | 18-09-1996 |
| | | JP 3163088 A | 15-07-1991 |
| | | NO 176964 B | 20-03-1995 |
| | | NO 179043 B | 15-04-1996 |
| | | NO 301376 B | 20-10-1997 |
| | | NO 954469 A | 01-03-1991 |
| | | NZ 235032 A | 28-04-1993 |
| | | RU 2073018 C | 10-02-1997 |
| | | US 5703187 A | 30-12-1997 |
| | | CN 1049849 A,B | 13-03-1991 |
| | | US 5872201 A | 16-02-1999 |
| | | PL 166689 B | 30-06-1995 |
| EP 0405446 A | 02-01-1991 | CA 2019256 A | 26-12-1990 |
| | | DE 69032257 D | 28-05-1998 |
| | | DE 69032257 T | 26-11-1998 |
| | | ES 2114854 T | 16-06-1998 |
| | | JP 2836188 B | 14-12-1998 |
| | | JP 3250007 A | 07-11-1991 |
| | | US 5043408 A | 27-08-1991 |

EPO FORM P0459

For more details about this annex : see Official Journal of the European Patent Office, No. 12/82